# EUROPÄISCHE PATENTSCHRIFT

(11) **EP 0 392 200 B1**
(45) Veröffentlichungstag und Bekanntmachung des Hinweises auf die Patenterteilung: **24.08.1994**
(21) Anmeldenummer: 90104764.7
(22) Anmeldetag: 14.03.1990
(51) Int. Cl.: H01H 3/16, F24C 15/02

(54) **Sicherheits-Türschloss für Türen von Elektrogeräten**
Safety door latch for electrical appliances
Dispositif de verrouillage à sécurité pour une porte d'appareil électrique

(30) Priorität: 13.04.1989 DE 8904660 U
(43) Veröffentlichungstag der Anmeldung: 17.10.1990
(73) Patentinhaber: Ellenberger & Poensgen GmbH, D-90518 Altdorf (DE)
(72) Erfinder: Onderka, Oswald, D-8503 Altdorf (DE); Krasser, Fritz, D-8503 Altdorf (DE)
(74) Vertreter: Tergau, Enno, Dipl.-Ing.

(56) Entgegenhaltungen:
- EP-A- 0 197 557
- GB-A- 2 143 992
- US-A- 2 710 329
- US-A- 4 703 147
- US-A- 4 717 794

## Beschreibung

Die Erfindung betrifft ein Sicherheits-Türschloß für Türen von Elektrogeräten, insbesondere von Elektroherden, mit den im Oberbegriff des Ansprüches 1 aufgeführten Merkmalen. Derartige Türschlösser dienen dazu, einerseits die Tür sicher in Schließstellung zu halten und eine handbetätigte Öffnung nur in für die Bedienungsperson ungefährlichem Betriebszustand des Elektrogerätes zu ermöglichen. Dazu betätigt der Rastbolzen bei der Türschließung ein Schaltelement, welches mit der Erreichung der sicheren Türverriegelung die Ansteuerung der Stromkreise im Gerät freigibt. Es ist ein allgemeines Bedürfnis, derartige Türschlösser möglichst manipulationssicher, robust und funktionssicher auszugestalten.

Bei einem aus US 4 703 147 bekannten Türschloß ist die Türseite mit zwei Rastschwenkhebeln ausgestattet, die im Schließzustand mit ihren Betätigungsenden jeweils einen Abschirmvorsprung am Türschloßgehäuse hintergreifen und dadurch jeweils einen im Schloßgehäuse verschiebbar gelagerten Schaltschieber betätigen, die erst nach Erreichung ihrer Verschiebeendstellung die im Gerät anzusteuernden Stromkreise freigeben. Bei diesem bekannten Türschloß dienen die Abschirmvorsprünge nur als Sichtblende, um die Betätigungsenden der beiden Schaltschieber von außen nicht erkennbar zu machen. Diese Sicherung läßt sich indessen einfach dadurch überlisten, daß die beiden Schaltschieber z.B. durch hakenartig abgebogene, die Abschirmvorsprünge hintergreifende Drähte od.dgl. in ihre Einschaltstellung überführt werden.

Der Erfindung liegt die Aufgabe zugrunde, ein Sicherheits-Türschloß der eingangs genannten Art trotz einfachen Aufbaus so auszugestalten, daß es verschiedenste Sicherheitsfunktionen zuverlässig erfüllt und daß es auch sicherheitsgefährdenden Manipulationen weitgehend standhält. Diese Aufgabe wird zunächst durch die Kennzeichnungsmerkmale des Ansprüches 1 gelöst.

Die erfindungsgemäße Konstruktion arbeitet mit nur einem Schaltschieber, der nur linear innerhalb des Schloßgehäuses durch unmittelbare Verschiebung seitens des ebenfalls nur für eine lineare Verschiebung vorgesehenen Rastbolzens verschiebbar ist. Weiterhin ist der Schaltschieber bei geöffnetem Türschloß von unterschiedlichen Seiten her durch mehrere Rastklinkenträger in seiner Ausschaltstellung verriegelt, die in unterschiedlichen Richtungen auseinandergeführt werden müssen, bevor der Schaltschieber gegen den Druck einer ihn in Richtung seiner Ausschaltstellung beaufschlagenden Feder in seine eine Bestromung des elektrischen Gerätes überhaupt erst ermöglichende Einschaltstellung verschoben werden kann. Dazu müssen dann insgesamt mindestens drei Druckkomponenten in drei unterschiedlichen Richtungen auf drei unterschiedliche Türschloßelemente einwirken, was für eine mit nur zwei Händen ausgestattete Bedienungsperson praktisch unmöglich ist.

Durch die Lehre des Ansprüches 2 sind die Klinkenträger besonders einfach und sicher innerhalb des Gehäuses gehaltert. Zur jeweils selbsttätigen Verriegelung des Schaltschiebers in seiner Ausschalt- bzw. Türöffnungsstellung sind nur geringfügige Federkräfte erforderlich. Wie sich aus weiteren, in den Unteransprüchen aufgeführten Merkmalen ergibt, verlaufen die Klinkenhebel in Verriegelungsstellung etwa parallel zum Schaltschieber, so daß wegen des Fehlens von Hebelarmen selbst starke, in manipulatorischer Absicht auf den Schaltschieber in Einschaltrichtung von außen einwirkende Kräfte von den Klinkenhebeln abgefangen bzw. ausgehalten werden.

Bei eingeschaltetem Elektrogerät ist zwar der Rastbolzen des Türschlosses durch gewissermaßen ein doppelt wirksames Federrastgesperre gegen unbeabsichtigte Türöffnung gesichert. Die Türöffnung durch eine Bedienungsperson ist jedoch normalerweise möglich, nämlich dann, wenn der Betriebszustand des Elektrogerätes bei einer Türöffnung keine Gefährdung für die Bedienungsperson bedeutet.

Besondere Sicherheitsvorkehrungen sind jedoch bei modernen Elektroherden mit Mikrowellen- oder mit Pyrolysefunktion erforderlich. Im letztgenannten Fall erfolgt beispielsweise eine Erhitzung der Backröhrenwände auf ca. 500°C. Bei derartigen Betriebszuständen muß sichergestellt sein, daß eine Türöffnung mit Sicherheit gesperrt ist. Sie soll erst möglich sein, wenn wieder ein bestimmter Abkühlungszustand erreicht ist. Dazu dient das Kennzeichnungsmerkmal des Anspruches 4. Die Aktivierung und nach Wiederherstellung eines gefahrlosen Funktionszustandes des Elektrogerätes die Inaktivierung des Blockiergliedes erfolgen durch die elektrische Programmsteuerung des Gerätes.

Das Merkmal des Anspruches 5 ermöglicht eine raumsparende Flachbauweise des Türschlosses, ohne dessen Manipulationssicherheit zu verringern. Es müßten beide Klinkenhebel zunächst in unterschiedliche Richtungen, d.h. mit zwei unterschiedlichen Manipulationsgeräten in ihre Freigabestellung bewegt und dort gehalten werden, bevor der Schaltschieber in eine dritte Richtung, nämlich in Einschaltrichtung von außen verschoben werden kann, um das Gerät zu bestromen.

Die Lehre des Anspruches 6 geht von der bereits angesprochenen Tatsache aus, daß beim Zusammenwirken des türseitigen Rastbolzens mit den Rastklinken die Longitudinalbewegung des Rastbolzens in eine Transversalbewegung der Klinkenträger umgelenkt wird. Wegen der Ausgestaltung dieser Klinkenträger als zangenartig wirksame, einseitig schwenkgelagerter Klinkenhebel werden die auf die Rastklinken in Einschaltrichtung einwirkenden Druckkomponenten verschleißfrei und sicher abgefangen. Dies wird auch durch die äußerst geringen Winkelbewegungen am gelagerten Ende der Klinkenhebel bei deren Schwenkung zwischen Rast- und Freigabestellung begünstigt, so daß es zu keinem nennenswerten Lagerverschleiß kommt. Durch das Merkmal des Anspruches 8 ist eine besonders einfache und wirksame Rückstellung der Klinkenhebel mit günstiger Hebelübersetzung gewährleistet. Die in den Ansprüchen 9 bis 11 niedergelegten Merkmale bedeuten eine konstruktiv einfache und fertigungstechnisch leicht zu realisierende Lösung für die Kopplung des Schließ- und Öffnungsvorganges der Tür mit der Steuerung der Klinkenhebelbewegungen. Die Steuerflächen der Rastklinken und die auf sie einwirkenden Gegenflächen am Rastbolzen oder Schaltschieber wirken im Sinne eines Keilgetriebes zusammen, was wiederum die Funktionssicherheit begünstigt.

Die Merkmale der Ansprüche 12 und 13 ermöglichen eine großflächige Ausbildung der Keilflächen mit entsprechender Verringerung ihrer spezifischen Flächenbelastung beispielsweise bei einem heftigen Zuschlagen der Elektrogerätetür. Dabei bewirken die zusammenwirkenden Konusflächen an den Rastklinken eine Zentrierung des Rastbolzens, wie überhaupt die beidseitig gleichmäßige Druckbeaufschlagung auch des Schaltschiebers durch die Riegelklinken der Klinkenhebel für eine Minimierung der vom Isolierstoffgehäuse abzufangenden seitens des Schaltschiebers einwirkenden Lagerdrücke sorgt. Das Merkmal des Anspruches 14 erhöht die Manipulationssicherheit, indem der Zapfen und die Radialstege des Schaltschiebers bei geöffneter Tür und somit bei entferntem Rastbolzen den Raum zwischen den Rastklinken ausfüllen und auch dadurch das Einführen eines Fremdgegenstandes in das Türschloß verhindern.

Durch die Ausgestaltung des Schaltschiebers nach Anspruch 16 bis 18 sichern die Riegelklinken bei geöffneter Tür die Verrastung des Schaltschiebers in seiner Ausschaltstellung. Andererseits dienen die nach Art von Keilflächen wirksamen, öffnungsseitigen Flanken der Riegelklinken dazu, daß der Schaltschieber unter dem permanent auf ihn einwirkenden Rückstellfederdruck die Klinkenhebel selbsttätig auseinanderspreizt und den verriegelten Ausschaltzustand herstellt, ohne daß es dazu eines elektrischen Antriebes bedarf. Diese Fähigkeit ist von Bedeutung auch für den Fall, daß einmal kurtzfristig die Netzspannung des Elektrogerätes ausfällt. Die Ausbildung nach Anspruch 18 bewirkt, daß bei einem Versuch, den Schaltschieber gewaltsam gegen seine Verriegelung in Einschaltrichtung zu drücken, die spezifische Flächenbelastung der Anschlagflächen und damit die Gefahr des Abbrechens der Riegelklinken minimiert wird. Die weiteren Anspruchsmerkmale dienen der Ausgestaltung der Blockiereinrichtung, die besonders raumsparend ausgestaltet ist. Beim gewaltsamen Öffnungsversuch der Tür bei blockierter Rastbolzenverklinkung werden die auf die Klinkenhebel ausgeübten Spreizkräfte von den Laschen des Schwenkteils leicht aufgenommen und abgefangen, wobei lediglich eine Biegebeanspruchung der Laschen entsteht. Die Lagerung des Schwenkteils hingegen bleibt praktisch unbeansprucht, was sich wiederum günstig auf Lebensdauer und Funktionssicherheit der Blockiervorrichtung auswirkt.

Die Maßnahme nach Anspruch 21 gewährleistet, daß während eines gewaltsamen Öffnungsversuches die auf die Klinkenhebel ausgeübten Spreizdrücke ohne Hebelübersetzung auf die Laschen des Schwenkteiles übertragen werden.

Der in den Ansprüchen 23 und 24 erläuterte Antriebsmechanismus für das Schwenkteil hat den Vorteil, daß die elektromagnetische Antriebsrichtung nur in einer Richtung wirkt und daß der Antriebsstößel nicht gelenkig gelagert zu werden braucht. Durch die Merkmale der Ansprüche 26 bis 28 spielt die Einbaulage des Türschlosses für die Funktionssicherheit der Blockiereinrichtung und ihrer Antriebsteile keine ins Gewicht fallende Rolle. Durch das Merkmal des Anspruches 30 braucht der elektromagnetische Antrieb nur für Kurzzeitbetrieb ausgelegt zu sein.

Durch die Merkmale der Ansprüche 32 ff werden beim Anbau der Gerätetür an das Gerät vorzunehmende Einstellarbeiten erleichtert. Die Gerätetür muß nämlich so am Gerät montiert werden, daß sie einerseits in Schließstellung zwar flächig am Gerät anliegt, daß aber trotzdem der Rastbolzen mit nur einer durch den Schaltweg des Schaltschiebers vorgegebenen Eindringtiefe in das Isoliergehäuse des Türschlosses eindringt. Dabei ist zu berücksichtigen, daß sich das Türschloß nach der Gerätemontage an einer von außen nicht mehr zugänglichen Stelle befindet. Eventuell durch Fertigungstoleranzen bedingte Veränderungen des Abstandes zwischen Türschloßgehäuse und Gerätetür sind nicht mehr möglich. Das erfindungsgemäße, gegenüber dem Rastbolzen wirksame Federrastgesperre hält den Rastbolzen selbsttätig in seiner Soll-Eindringtiefe am Türschloßgehäuse, so daß seine anschließende Fixierung an der Gerätetür und Justierung schnell und positionssicher durchführbar sind. Außerdem bedeutet dieses doppelseitig wirksame Federrastgesperre einen weiteren Zugewinn an Zuhaltekraft für die Gerätetür bei normalem Gerätebetrieb.

Durch die Maßnahme gemäß Anspruch 37 ist sichergestellt, daß das Einrasten der Rastwalzen in die Rastrille innerhalb eines eng begrenzten Bewegungsbereiches des Rastbolzens erfolgt. Es wird dabei die sichere Halterung erhöht. Das Auffinden des Rastpunktes bei den Justierarbeiten wird erleichtert, zumal es bei nahezu geschlossener Tür nur nach Tast- und Gehörsinn erfolgen kann.

Die Erfindung wird anhand eines in den Figuren dargestellten Ausführungsbeispieles näher erläutert. Dabei zeigen:

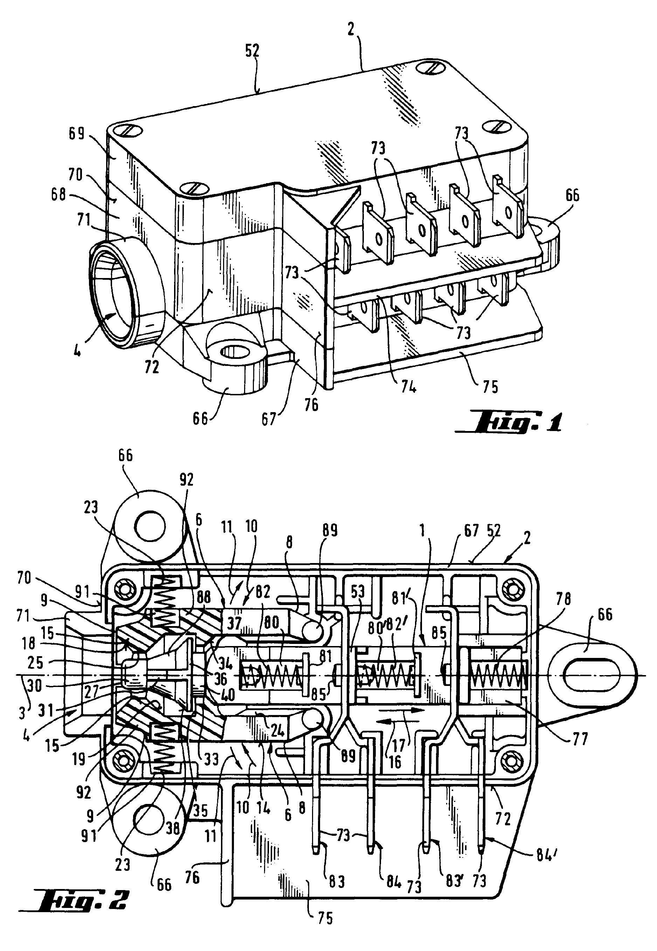

- Fig. 1: eine perspektivische Außenansicht des Sicherheits-Türschlosses,
- Fig. 2: eine Draufsicht auf das Türschloß bei abgehobenem Mittelteil in Ausschaltstellung des Schaltschiebers und in den Schaltschieber verriegelnder Stellung der Klinkenhebel,
- Fig. 3: eine perspektivische Explosionsdarstellung der für die Türschloßverriegelung wesentlichen Funktionsteile bei vom Bodenteil abgehobenem Gehäusemittelteil,
- Fig. 4: eine perspektivische Detailansicht des Schaltschiebers und der beiden mit ihm zusammenwirkenden Rastklinkenhebel,
- Fig. 5: eine schematische Darstellung des Auseinanderspreizens der Klinkenhebel durch den in seine Riegelstellung verschobenen Rastbolzen,
- Fig. 6: eine Draufsicht auf die für die Türschloßverriegelung wesentlichen Funktionsteile in Einschalt-Verschiebestellung des Schaltschiebers,
- Fig. 7: eine Draufsicht auf die in einer Nebenkammer des Isolierstoffgehäuses untergebrachte Blockiervorrichtung bei in seiner Inaktivstellung befindlichem Blockierglied,
- Fig. 8: einen Schnitt entsprechend der Linie VIII-VIII in Fig. 7,
- Fig. 9: eine Draufsicht auf die Blockiereinrichtung analog Fig. 7, jedoch bei in seiner Aktiv- bzw. in seiner Blockierstellung befindlichem Blockierglied,
- Fig. 10: einen Schnitt entsprechend der Linie X-X in Fig. 9,
- Fig. 11: eine perspektivische Explosionsdarstellung der zwischen Mittelteil und Deckelschale angeordneten Blockiervorrichtung,

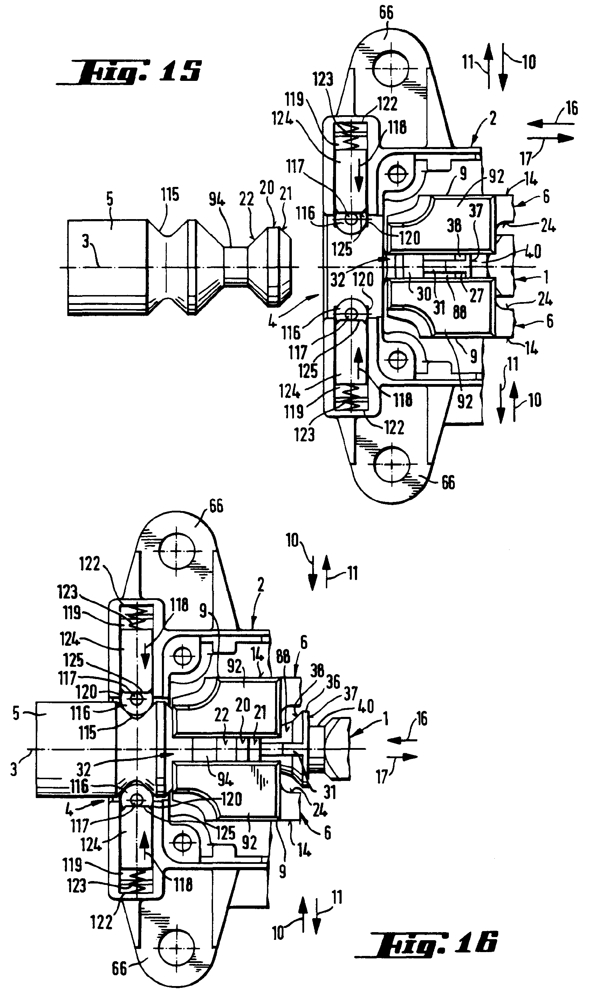

- Fig. 12 - 14: schematische Detaildarstellungen des Schrittschalt-Schwenkantriebes des Blockiergliedes der Blockiereinrichtung,
- Fig. 15 - 17: eine modifizierte Ausführungsform des Türschloßgehäuses und des Rastbolzens für die Erleichterung der Türschloßjustierung bei der Montage.

Das aus Isolierwerkstoff bestehende Türschloßgehäuse 2 besteht aus einer Bodenschale 67 mit angeformten Befestigungsflanschen 66, einem Mittelteil 68 und einer Deckelschale 69. Das Gehäuse 2 weist die Umrißform eines Quaders auf. In seiner stirnseitigen Öffnungs- oder Schmalseitenwand 70 ist eine von einem Ringkragen 71 umgebene Gehäuseöffnung 4 vorgesehen. Aus der vorderen Längsseitenwand 72 stehen entlang der Trennfuge zwischen Deckelschale 69 und Mittelteil 68 sowie entlang der Trennfuge zwischen Bodenschalte 67 und Mittelteil 68 parallel übereinander zwei Reihen von Anschlußfahnen 73 für elektrische Anschlüsse heraus. Die beiden Reihen sind auf der Gehäuseaußenseite durch eine Trennwand 74 voneinander und durch zwei Trennwände 75,76 zur Bodenseite und zur Schmalseitenwand 70 hin abgeschirmt. Diese Seiten sind in Einbaustellung des Türschlosses dessen außenliegende Seiten.

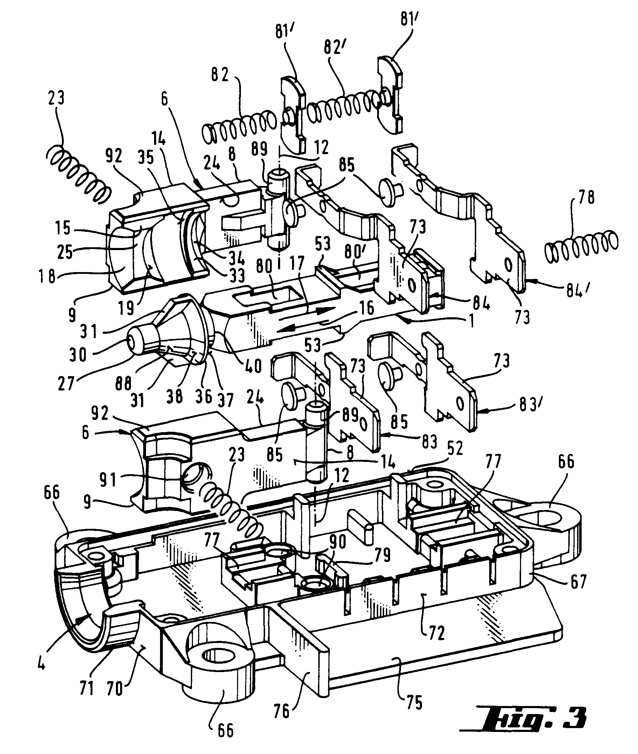

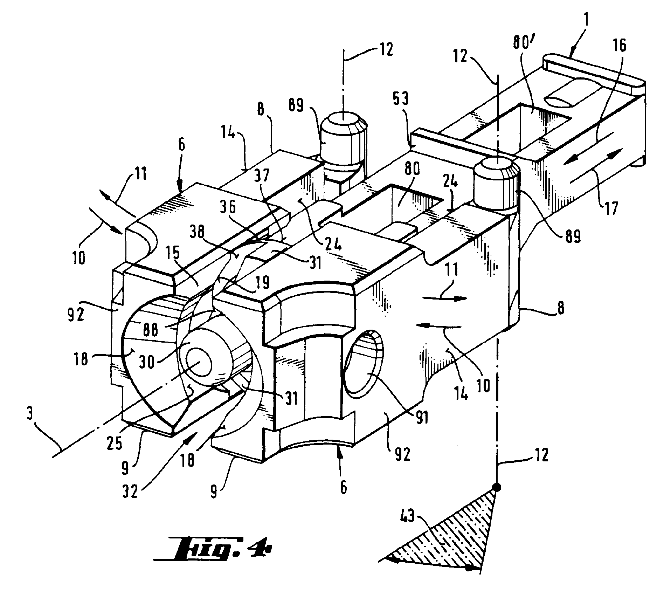

Zunächst seien anhand von Fig. 2 - 6 die im Türschloßgehäuse zwischen Mittelteil 68 und Bodenschale 67 angeordneten Bauteile der Schließ- und Verrastungsvorrichtung des Türschlosses beschrieben. Deren zentrales Teil ist der Schaltschieber 1, der sich mit seiner Mittellängsachse 3 in Längsrichtung der im wesentlichen eine rechteckige Umrißform aufweisenden Bodenschale 67 erstreckt. Innerhalb jeweils zweier an der Bodenschale 67 und am Mittelteil 68 angeformter Führungen 77 ist der Schaltschieber 1 in Richtung seiner Mittellängsachse 3 linear längsverschiebbar. Der Schaltschieber 1 wird durch eine zwischen seiner in Einschaltrichtung 17 weisenden Stirnseite und der gegenüberliegenden Gehäusewand einliegenden Druckfeder 78 mit zwei an seiner Boden- bzw. Oberseite angeordneten Vorsprüngen 53 gegen gleichwirkende, gehäusefeste Anschläge 79 an der Bodenschale 67 bzw. am Mittelteil 68 gedrückt. In Anlagestellung dieser Vorsprünge 53 an den Anschlägen 79 ist die Ausschaltstellung des Schaltschiebers 1 erreicht.

In seinem mittleren Abschnitt weist der Schaltschieber 1 zwei rechteckige Aussparungen 80,80′ auf. In diese sind jeweils eine Kontaktbrücke 81,81′ und eine die Kontaktbrücken 81,81′ in Einschaltrichtung beaufschlagende und gegen die Schmalseitenwände der Schaltschieberaussparungen 80,80′ drückende Druckfeder 82,82′ eingesetzt. Jeder mit dem Schaltschieber 1 bewegungsgekoppelten Kontaktbrücke 81,81′ ist ein Paar von gehäusefesten Kontaktteilen 83,84 und 83′,84′ zugeordnet. Die Kontaktteile 83,84 und 83′,84′ flankieren und überqueren beidseitig den Schaltschieber 1 rechtwinklig zu seiner Längsachse 3, wobei jeweils ein Kontaktteil 83,83′ eines Kontaktteilpaares oberhalb und dessen anderes Kontaktteil 84,84′ unterhalb des Schaltschiebers 1 angeordnet sind. Als gehäusefeste Gegenkontakte zu den mit dem Schaltschieber 1 bewegungsgekoppelten Kontaktbrücken 81,81′ tragen die Kontaktteile 83,84;83′,84′ jeweils Festkontakte 85.

Das in Ausschaltrichtung 16 weisende Ende 27 des Schaltschiebers 1 ist mit einer kopfförmigen Verdickung versehen. Der Kopf enthält einen sich in Ausschaltrichtung 16 verjüngenden Kegelstumpf 88, an dessen verjüngtes Ende ein Zapfen 30 angesetzt ist. Der Kopf trägt an seinem in Einschaltrichtung 17 weisenden Ende eine ringförmig umlaufende, radial ausgerichtete und im Querschnitt sägezahnförmige Rastvorsprungsfläche. Der dadurch gebildete Rastvorsprung 36 weist wirkungsmäßig eine in Einschaltrichtung gerichtete und rechtwinklig zur Mittellängsachse 3 verlaufende Rastanschlagfläche 37 und eine in Ausschaltrichtung 16 gerichtete Keilfläche 38 auf. Aus dem Kegelstumpf 88 stehen weiterhin zwei diametral einander gegenüberliegende Radialstege 31 hervor.

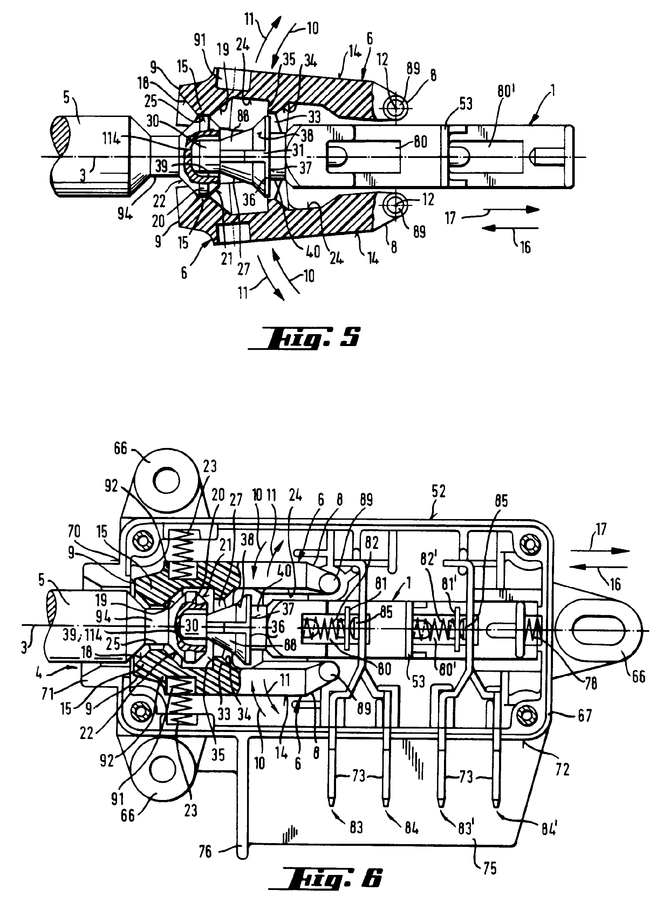

In der an die Gehäuseöffnung 4 angrenzenden Hälfte der Bodenschale 67 sind weiterhin zwei Klinkenhebel 6 an diametral gegenüberliegenden Seiten des Schaltschiebers 1 und parallel zu dessen Mittellängsachse 3 verlaufend gelagert. Sie sind mit ihren Freienden 9 parallel zur Oberfläche der Bodenschale 67 in vom Schaltschieber 1 weggewandter Richtung ausschwenkbar. In eingeschwenkter Ruhestellung dienen sie zur Verriegelung des Schaltschiebers 1 in dessen Ausschaltstellung z.B. bei geöffneter Tür. Außerdem dienen sie bei geschlossener Tür zur Festlegung eines türseitigen, mit dem Verriegeln der Tür in die Gehäuseöffnung 4 eingeführten Rastbolzens 5 (Fig. 5,6). Die Klinkenhebel 6 sind mit ihren in Einschaltrichtung 17 weisenden Enden 8 mittels angeformter Zapfen 89 in Gehäuseaugen 90 der Bodenschale 67 und des Mittelteils 68 schwenkbar gelagert. Die Schwenkachsen 12 der Klinkenhebel verlaufen rechtwinklig zur Mittellängsachse des Schaltschiebers 1.

Die Klinkenhebel 6 werden im Bereich ihrer Freienden 9 jeweils von einer Druckfeder 23 in ihre Rast- oder Ruhestellung, d.h. in Rastrichtung 10 beaufschlagt. Die Druckfedern 23 sind in Sacklöcher 91 an den dem Schaltschieber 1 abgewandten Außenseiten 14 der Rastklinkenhebel 6 eingesetzt und stützen sich am Gehäuse 2 ab. Im Bereich ihrer Freienden 9 sind die Rastklinkenhebel 6 als rinnenförmige Halbschalen 92 ausgebildet, deren dem Schaltschieber 1 zugewandte Innenseiten 24 mit parallel zur Mittellängsachse 3 ausgerichteter Rinnenlängsrichtung konkav ausgewölbt sind. Sie umfassen den Kopfbereich (Ende 27) des Schaltschiebers 1.

Die beiden Halbschalen 92 weisen je eine im Querschnitt keilförmige Rastklinke 15 einerseits zur Steuerung ihrer Funktionsbewegungen und andererseits zur Verrastung des türseitigen, durch die Gehäuseöffnung 4 eingeführten Rastbolzens 5 auf. Die Rastklinke 15 befindet sich am Freiende 9 der Klinkenhebel 6. Weiterhin enthalten beide Klinkenhebel 6 zwischen ihrem Freiende 9 und ihrem Lagerende 8 eine im Querschnitt sägezahnförmige Riegelklinke 33 zur Fixierung des Schaltschiebers in seiner Ausschaltstellung auf. Beide Klinken 15,33 stehen aus den rinnenförmig-konkaven Innenseiten 24 der Halbschalen 92 radial in Rastrichtung 10 nach innen vor und weisen dabei die Form halbringartiger Wülste auf.

Die öffnungsseitigen Riegelklinken 15 enthalten eine in Ausschaltrichtung 16 weisende, halbkonusartige Keilfläche 18 und eine in Einschaltrichtung 17 weisende, ebenfalls halbkonusartige Keilfläche 19. Sie umfassen mit ihren dazwischenliegenden Halbringflächen 25 ringblendenartig den Zapfen 30 des Schaltschiebers 1 in Türoffenstellung (Fig .2). Die Riegelklinken 33 liegen zwischen den Rastklinken 15 und den Schwenkzapfen 89 der Klinkenhebel 6. Sie weisen eine rechtwinklig zur Mittellängsachse 3 und in Ausschaltrichtung 16 stehende, ebene Anschlagfläche 35 und eine in Einschaltrichtung 17 stehende Keilfläche 34 auf. Die Neigungswinkel der Keilflächen 18,19 der Klinken 15 und der der Gehäuseöffnung 4 abgewandten Keilfläche 34 der Riegelklinken 33 betragen etwa 45°.

Wie in Fig. 5 dargestellt, ist der türseitige Rastbolzen 5 zapfenartig ausgebildet. Er verjüngt sich an seinem gehäuseseitigen Ende zu einem Abschnitt 94 mit kleinerem Durchmesser, an dessen in die Gehäuseöffnung 4 einzuführendem Ende ein kopfartiger, umlaufender Ringvorsprung 20 zur Steuerung der Bewegung der Klinkenhebel 6 und zur Verrastung des Rastbolzens 5 angeformt ist. Der Ringvorsprung 20 enthält eine in Einschaltrichtung 17 weisende und mit der Keilfläche 18 der Klinkenhebel 6 zusammenwirkende Außenkonusfläche 21 und eine in Ausschaltrichtung 16 weisende und mit der Keilfläche 19 der Klinkenhebel 6 zusammenwirkende Innenkonusfläche 22. Stirnseitig ist der Rastbolzen 5 mit einer sacklochförmigen Ausnehmung 39 zur Einlage des Zapfens 30 des Schaltschiebers 1 versehen. In dieser gegenseitigen Einlagestellung wird der Schaltschieber 1 beim Schließen des Rastbolzens 5 in seine Einschaltstellung (Fig .6) überführt.

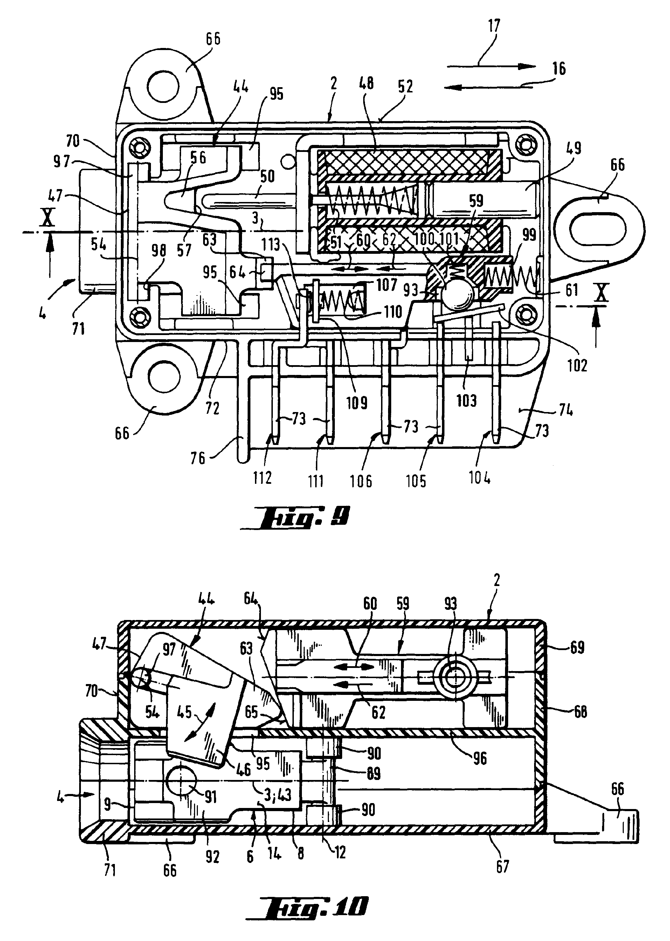

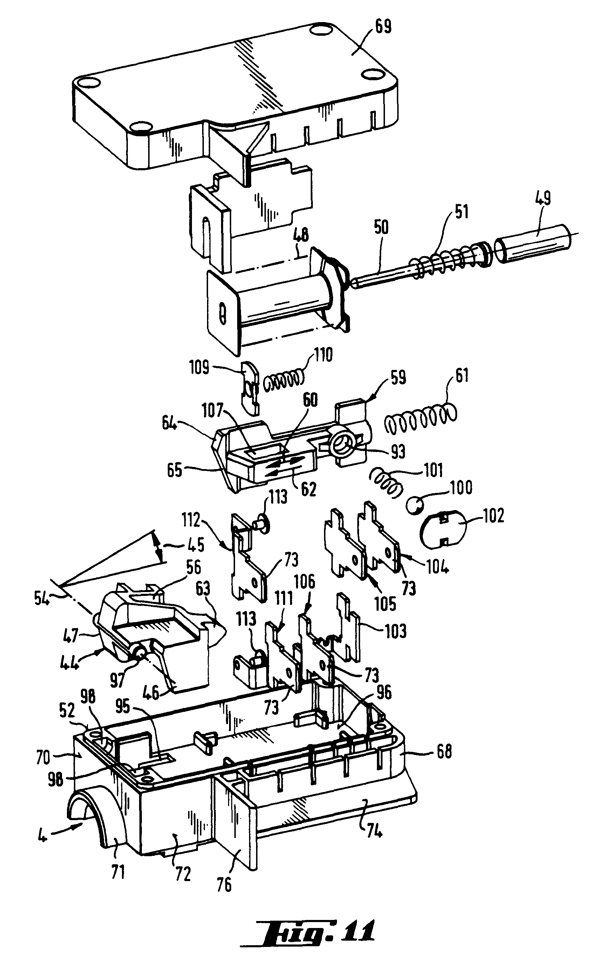

Anhand der Fig. 7 bis 11 wird die Blockiervorrichtung näher beschrieben. Sie dient zur Blockierung der Klinkenhebel 6 in ihrer Raststellung. Sie ist zwischen Mittelteil 68 und Deckelschale 69 des Isolierstoffgehäuses 2 untergebracht. Fig.7 gibt dabei einen Einblick in das Innere der Blockiervorrichtung bei abgenommener Deckelschale 69. Kernstück der Blockiervorrichtung bildet das als Schwenkteil 44 ausgebildete Blockierglied, das zwischen einer die Klinkenhebel 6 freigebenden, inaktiven Ausschwenkstellung und einer die Klinkenhebel 6 blockierenden, aktiven Einschwenk- oder Blockierstellung gemäß Pfeil 45 schwenkbar ist. Das Schwenkteil 44 weist an seine Seitenflanken angeformte Laschen 46 auf, mit denen es in seiner Blockierstellung durch Aussparungen 95 im Zwischenboden 96 des Mittelteils 68 greift und die Klinkenhebel 6 klammerartig und blockierend umfaßt.

Das Schwenkteil 44 ist an seinem in Ausschaltrichtung 16 des Schaltschiebers 1 zeigenden Ende 47 mit einem angeformten Zapfen 97 in Ausnehmungen 98 des Gehäusemittelteils 68 schwenkbar gelagert und grenzt dabei an die Schmalseitenwand 70 an. Die Schwenkachse 54 des Schwenkteils 44 verläuft parallel zur Schwenkebene 43 der Klinkenhebel 6 und rechtwinklig zur Mittellängsachse 3 des Schaltschiebers 1. Zum Schwenkantrieb des Schwenkteils 44 ist an der der Längsseitenwand 72 gegenüberliegenden Längsseitenwand 52 eine elektromagnetische Schrittschalt-Antriebsvorrichtung angeordnet. Sie besteht aus einer Spule 48, einem Anker 49, einem das Schwenkteil 44 beaufschlagenden Antriebsstößel 50 und einer Rückstellfeder 51 für den Antriebsstößel 50. Der Antriebsstößel 50 beaufschlagt wahlweise zwei Hohlkehlen 55,56 des Schwenkteils 44 als Gegenlager, wobei das Schwenkteil 44 durch Beaufschlagung seiner äußeren Hohlkehle 56 in seine inaktive Ausschwenkstellung und durch Beaufschlagung seiner schaltschieberseitigen, inneren Hohlkehle 55 in seine aktive Blockierstellung schwenkbar ist. Die Hohlkehlen 55,56 sind durch einen keilförmigen Steg 57 voneinander getrennt. Dessen Keilflächen 58,58′ leiten den als Kippstößel ausgebildeten Antriebsstößel 50 zum Schwenkantrieb des Schwenkteils 44 alternierend in die entsprechenden Hohlkehlen 55,56.

Angrenzend an die Längsseitenwand 72 ist ein Riegelschieber 59 zur Fixierung des Schwenkteils 44 in seiner inaktiven Ausschwenk- oder in seiner aktiven Blockierstellung angeordnet. Die Verschieberichtung 60 des Riegelschiebers 59 verläuft rechtwinklig zur Schwenkachse 54 des Schwenkteils 44 und parallel zur Schwenkebene 43 des Klinkenhebels 6. In einer sacklochförmigen Ausnehmung 99 der dem Schwenkteil 44 abgewandten Stirnseite des Riegelschiebers 59 ruht eine Druckfeder 61, die sich an der Gehäusewand abstützt und die den Riegelschieber 59 in Fixierrichtung 62 beaufschlagt. Die dem Schwenkteil 44 zugewandte Stirnseite des Riegelschiebers 59 ist in Fixierrichtung 62 keilförmig wirksam ausgebildet. Sie bildet dabei eine in Richtung auf das Schwenkteil 44 vorstehende äußere Steuerkante 64 und eine zurückstehende innere Steuerkante 65. Die beiden Steuerkanten 64,65 beaufschlagen wechselseitig eine an das Schwenkteil 44 angeformte, keilförmige Steuernocke 63.

In seinem an die Druckfeder 61 angrenzenden Bereich trägt der Riegelschieber 59 an seiner der Längsseitenwand 72 zugewandten Seite ein Auge 93, in das eine Kugel 100 und eine sie beaufschlagende Feder 101 eingelegt sind. Die Druckfeder 101 drückt die Kugel 100 gegen eine Schaltwippe 102. Die Schaltwippe 102 ist auf einem gehäusefesten Kippsteg 103 gelagert, der mit dem einen Ende der Spule 48 elektrisch leitend verbunden ist. Durch die Schaltwippe 102 sind zwei den Kippsteg 103 flankierende Kontaktteile 104,105 abwechselnd mit dem Kippsteg 103 und dadurch mit der Spule 48 verbindbar.

Ein drittes, zum Kontaktteil 105 in Fixierrichtung 62 beabstandet angeordnetes Kontaktteil 106 ist mit dem anderen Ende der Spule 48 elektrisch leitend verbunden. Der an das Schwenkteil 44 grenzende Teil des Riegelschiebers 59 weist eine rechteckige Aussparung 107 auf, in die mit dem Riegelschieber 59 bewegungsgekoppelt eine Kontaktbrücke 109 und eine sie in Fixierrichtung 62 beaufschlagende Feder 110 eingelegt sind. Der Kontaktbrücke 109 sind zwei gehäusefeste Kontaktteile 111,112 zugeordnet, die jeweils einen Festkontakt 113 zur Kontaktierung mit der Kontaktbrücke 109 aufweisen. Die gehäusefesten Kontaktteile 104,105,106,111,112 stehen mit ihren Anschlußfahnen 73 aus der Längsseitenwand 72 des Gehäusemittelteils 68 rechtwinklig heraus.

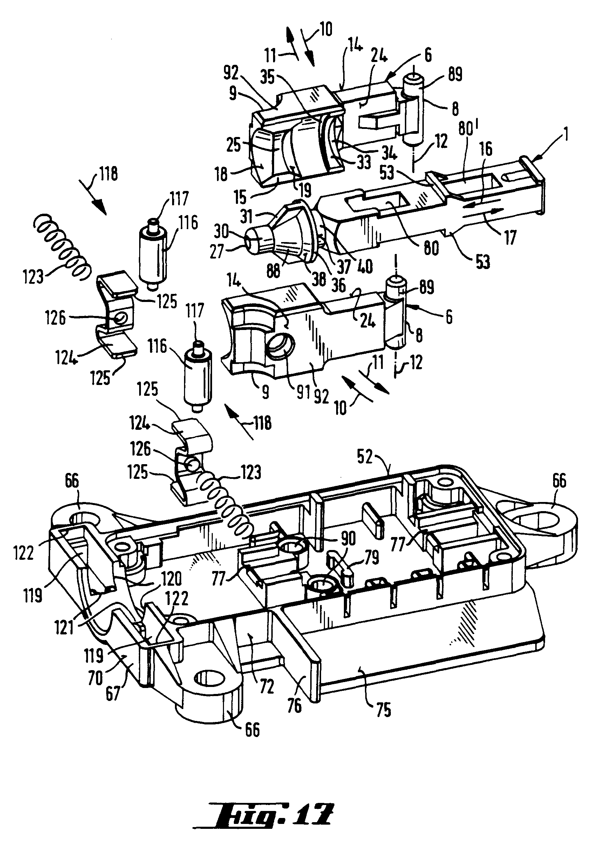

Die Justier-Rastvorrichtung ist in den Fig. 15 - 17 dargestellt. Sie enthält als Rastsperrer zwei Rastwalzen 116, die an diametral einander gegenüberliegenden Seiten der Gehäuseöffnung 4 angeordnet sind und in die Bewegungsbahn des türseitigen Rastbolzens 5 hineinstehen. An die Stirnseiten der Rastwalzen 116 sind Lagerzapfen 117 kleineren Durchmessers angeformt. Bei geschlossener Tür rasten die in Rastrichtung federbeaufschlagten Rastwalzen 116 in eine im Querschnitt etwa V-förmige Rastrille 115 am türseitigen Rastelement 5 ein. Die Rastrille 115 ist so bemessen, daß sie die Rastwalzen 116 etwa mit ihrer halben Querschnittsfläche aufnimmt. Die Rastwalzen 116 sind parallel zueinander und rechtwinklig zur Längsachse des Schaltschiebers 1 angeordnet und in beidseitig von der Gehäuseöffnung aus sich ins Innere des Isolierstoffgehäuses 2 erstreckenden und darin blind endenden Führungskanälen 119 beweglich geführt. Die Führungskanäle 119 sind im Querschnitt etwa rechteckig und weisen im der Gehäuseöffnung 4 zugewandten Mündungsende 120 jeweils zwei Anschläge 121 auf. An diesen Anschlägen 121 liegen die Rastwalzen 116 mit ihren Lagerzapfen 117 derart an, daß die Rastwalzen 116 mit einem Teil ihrer Umfangsfläche in die Gehäuseöffnung 4 hineinstehen.

In die Führungskanäle 119 ist jeweils eine Druckfeder 123 eingelegt, die sich am Blindende 122 der Führungskanäle 119 abstützt. Zwischen Druckfeder 123 und Rastwalze 116 ist ein im wesentlichen U-förmiger Lagerbügel 124 eingelegt. Dieser ist von der Druckfeder 123 in Rastrichtung 118 beaufschlagt und stützt sich mit den Stirnseiten 125 seiner beiden Schenkel gegen die Umfangsfläche der Lagerzapfen 117 ab. Am Mittelteil des U-förmigen Lagerbügels 124 ist auf der zur Druckfeder 123 weisenden Seite ein Arretierzapfen 126 für die Druckfeder 123 angeformt.

Die Arbeits- und Funktionsweise des Türschlosses wird wie folgt beschrieben:

Fig. 2 zeigt das offene Türschloß bei geöffneter Gerätetür und bei in Ausschaltstellung befindlichem Gerät. Der Schaltschieber 1 ist durch die Druckfeder 78 mit seinen Vorsprüngen 53 in Ausschaltrichtung 16 gegen die Anschläge 79 an der Unterschale 67 und am Mittelteil 68 gedrückt. In dieser Stellung kontaktieren die Kontaktbrücken 81,81′ ihre Gegen-Festkontakte 85 nicht, so daß die mit den Kontaktteilpaaren 83,84 und 83′,84′ in Verbindung stehenden Stromkreise im Gerät unterbrochen sind. Das Elektrogerät ist also nicht einschaltbar. Die von den Druckfedern 23 beaufschlagten Klinkenhebel 6 befinden sich in ihrer den Schaltschieber 1 in Ausschaltstellung fixierenden Riegel- bzw. Raststellung. Ein Versuch, den Schaltschieber 1 durch einen in die Gehäuseöffnung 4 eingeführten Gegenstand in Einschaltrichtung 17 zu verschieben, würde daran scheitern, daß seine Riegelvorsprünge 36 durch Hintergriff seitens der Riegelklinken 33 mit deren Anschlagflächen 35 arretiert sind.

Der zwischen den Rastklinken 15 liegende Zapfen des Schaltschiebers 1 verhindert, daß mit einem breiteren, beispielsweise mit einem zapfenförmigen Gegenstand, der zentral in die Gehäuseöffnung 4 eingeführt wird, beide Klinkenhebel 6 gleichzeitig erfaßt und radial nach außen in ihre Freigabestellung bewegt werden. Wird z.B. ein Schraubendreher exzentrisch in die Gehäuseöffnung 4 bzw. in die Trennfuge 32 zwischen den Klinkenhebeln 6 eingeführt, um die Klinkenhebel 6 auseinanderzuspreizen, so wird diesem Gegenstand durch die am Kopfende des Schaltschiebers 1 angeformten Radialstege 31 ein Widerstand entgegengesetzt. Ein weiteres Eindringen wird dadurch verhindert.

Der Schaltschieber wird erst durch das Schließen der Tür bzw. durch das damit verbundene Einführen des Rastbolzens 5 in das Türschloß in seine Freigabestellung verschoben. Der Rastbolzen 5 trifft dabei zunächst mit seiner Konusfläche 21 auf die in Ausschaltrichtung 16 weisenden Keilflächen 18 der Rastklinken 15 der Klinkenhebel 6, wodurch die Klinkenhebel 6 auseinandergespreizt (Freigaberichtung 11) und in ihre Freigabestellung bewegt werden. Fig. 5 zeigt eine Zwischenstellung, in der der Rastbolzen 5 die Klinkenhebel 6 in ihrer Freigabestellung hält und mit dem Boden 114 seiner sacklochförmigen Ausnehmung 39 den Zapfen 30 des Schaltschiebers 1 zum Verschiebeantrieb in Richtung auf seine Einschaltstellung beaufschlagt.

Durch weiteres Schließen der Gerätetür und durch das damit verbundene weitere Einführen des Rastbolzens 5 in das Türschloß wird der Schaltschieber 1 gegen den Druck der Druckfeder 78 in seine Einschaltstellung verschoben und die Klinkenhebel 6 kehren angetrieben durch die einwärts gerichteten Druckfedern 23 in ihre Ruhestellung zurück. Die Klinkenhebel 6 drücken nunmehr mit den in Einschaltrichtung 17 weisenden Keilflächen 19 ihrer Rastklinken 15 auf die Innenkonusfläche 22 des Ringvorsprungs 20 des Rastbolzens 5 und beaufschlagen letzteren nach Art von Rastsperren eines Federrastgesperres mit einer die Gerätetür in ihrer geschlossenen Stellung haltenden Kraftkomponente. In der Einschaltstellung des Schaltschiebers 1 sind die Festkontakte 85 zu den Kontaktteilpaaren 83,84 und 83′,84′ durch die Kontaktbrücken 81,81′ überbrückt. Die mit den Kontaktteilpaaren 83,84 und 83′,84′ verbundenen Stromkreise sind nun geschlossen und die Gerätefunktionen können wahlweise ablaufen.

Durch ein Öffnen der Gerätetür nach dem Ablauf der Gerätefunktionen werden die Klinkenhebel 6 infolge des Auflaufens der Innenkonusfläche 22 des Rastbolzens 5 auf die in Einschaltrichtung weisenden Keilflächen 19 ihrer Rastklinken 15 radial nach außen in ihre Freigabestellung bewegt. Der Schaltschieber 1 wird dadurch frei und durch die Druckfeder 78 selbsttätig in seine Ausschaltrichtung 16 verschoben, ohne daß eine Behinderung dieser Verschiebebewegung möglich ist.

Sollte es durch geschickte Manipulation doch gelingen, den Schaltschieber 1 in seine Einschaltstellung zu verschieben, so verharrt dieser nicht dort, sondern wird mechanisch durch die Druckfeder 78 selbsttätig wieder in seine Ausschaltrichtung 16 verschoben. Dabei drückt die Keilfläche 38 des Rastvorsprungs 36 des Schaltschiebers 1 gegen die in Einschaltrichtung 17 weisenden Keilflächen 34 der Riegelklinken 33. Die Klinkenhebel 6 werden dadurch auseinandergespreizt und der Schaltschieber 1 kehrt in seine Ausschaltstellung zurück. In dieser wird er durch den Hintergriff der Riegelklinken 33 mit deren Riegelanschlagflächen 35 an den Anschlagflächen 37 des Schaltschiebers 1 gehalten.

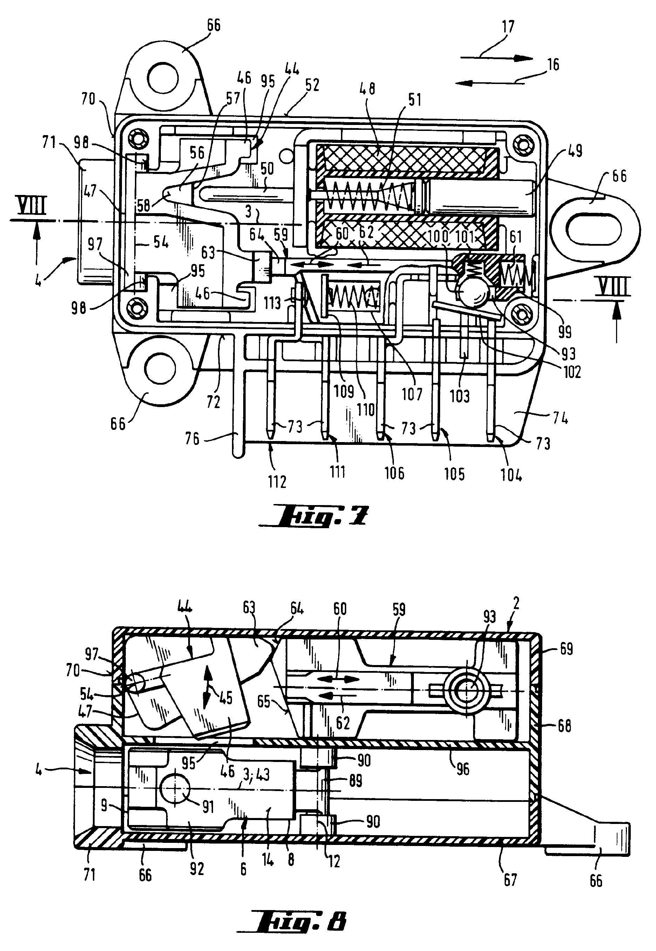

Fig. 7 und 8 zeigen den inaktiven Zustand der ausgeschwenkten Blockiervorrichtung. Das Schwenkteil 44 wird in dieser Inaktivstellung durch den federbelasteten Riegelschieber 59 fixiert. Dazu greift der Riegelschieber 59 mit seiner Steuerkante 64 unter die Steuernocke 63 und hält das Schwenkteil 44 in seiner inaktiven Ausschwenkstellung.

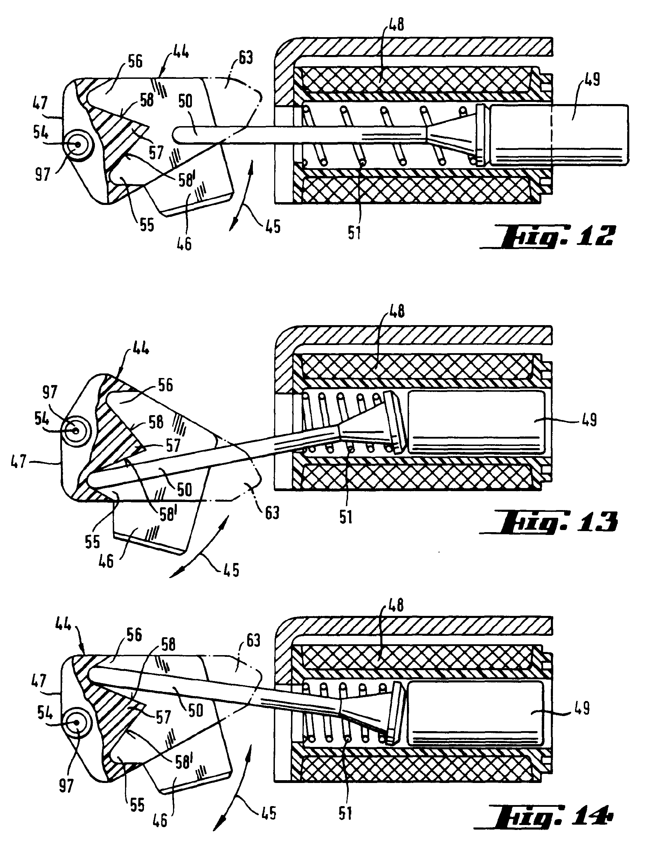

Der die Blockiervorrichtung aktivierende elektrische Schaltvorgang wird bei entsprechender Geräteprogrammierung nach dem Schließen der Gerätetür und beispielsweise durch das Einschalten des Pyrolysevorganges für die Backröhre ausgelöst. Dabei wird am Kontaktteil 104 eine Spannung angelegt. Der Stromkreis der Spule 48 ist über die Schaltwippe 102, den Kippsteg 103, die Spulenwicklung und das Kontaktteil 106 geschlossen. Der Antriebsstößel 50, der sich bisher in der in Fig. 12 dargestellten Ruhestellung befand, wird mit der Bestromung der Spule 48 durch den Anker 49 gegen die innere Keilfläche 58′ des Steges 57 geschoben und unter Abkippen in die innere Hohlkehle 55 geleitet (Fig.13).

Durch Beaufschlagung der schaltschieberseitigen Hohlkehle 55 schwenkt der Antriebsstößel 50 das Schwenkteil 44 in seine Blockierstellung ein, in der es mit seinen Laschen 46 durch die Aussparungen 95 des Zwischenbodens 96 hindurchgreift und die Außenseiten 14 der Klinkenhebel 6 in deren den Rastbolzen 5 fixierender Ruhestellung klammerartig umfaßt. Das Schwenkteil 44 seinerseits wird in seiner Blockierstellung durch den Riegelschieber 59 fixiert, indem dessen untere Steuerkante 65 die Steuernocke 63 in Einschwenkrichtung beaufschlagt und blockiert. Der Riegelschieber 59 ist über seine mit der Steuernocke 63 zusammenwirkenden Steuerkanten 64,65 mit dem Schwenkteil 44 bewegungsgekoppelt und wird bei der Einschwenkbewegung des Schwenkteils 44 durch die Druckfeder 61 selbsttätig aus seiner Ausgangsin seine Blockierstellung, nämlich in Fixierrichtung 62 verschoben. Dabei wird gleichzeitig die Schaltwippe 102 auf das Kontaktteil 105 umgelegt, an dem keine Spannung anliegt. Folglich wird der Stromkreis der Spule 48 unterbrochen und der Antriebsstößel 50 und der Anker 49 werden mechanisch selbsttätig von der Rückstellfeder 51 in ihre Ausgangslage zurückgeschoben.

Die Blockierung der Klinkenhebel 6 ist nur aufhebbar, indem nun am Anschluß 105 eine Spannung seitens der Geräteprogrammierung aufgeschaltet wird. Dadurch fährt der Antriebsstößel 50 vom Anker 49 angetrieben erneut vor. Durch die äußere Keilfläche 58 des Stegs 57 wird der Antriebsstößel 50 in die äußere Hohlkehle 56 geleitet. Durch die Beaufschlagung der äußeren Hohlkehle 56 wird das Schwenkteil 44 in seine inaktive Ausschwenkstellung geschwenkt und es ist wieder der in Fig. 7,8 gezeigte Zustand erreicht, in welchem die Klinkenhebel 6 des Türschlosses auseinanderspreizbar sind.

Die mit dem Riegelschieber 59 bewegungsgekoppelte Kontaktbrücke 109 ist infolge Anlage der vorstehenden, äußeren Steuerkante 64 des Riegelschiebers 59 an der Steuernocke 63 des Schwenkteils 44 des Türschlosses bei inaktiver Ausschwenkstellung des Schwenkteils 44 von den Festkontakten 113 der Kontaktteile 111,112 abgehoben. In der aktiven Einschwenk- oder Blockierstellung des Schwenkteils 44 dagegen liegt der Riegelschieber 59 mit seiner zurückstehenden, inneren Steuerkante 65 an der Steuernocke 63 des Schwenkteils 44 an. Dadurch steht der Riegelschieber 59 weiter in Fixierrichtung 62 vor und die mit ihm bewegungsgekoppelte Kontaktbrücke 119 überbrückt die Festkontakte 113 und verbindet folglich die Kontaktteile 111,112 miteinander. Damit ist ein weiterer Stromkreis zur Überwachung der Blockierstellung des Schwenkteils 44 steuerbar.

Die Justier-Rastvorrichtung gemäß Fig. 15 - 17 dient zur Erleichterung der Einstellarbeiten bei der Montage der Gerätetür. Diese Einstellarbeiten sind notwendig, weil der türseitige Rastbolzen 5 nur mit einer definierten Eindringtiefe in das Isoliergehäuse 2 eindringen und den Schaltschieber 1 in eine definierte Einschaltstellung bewegen soll und außerdem Fertigungstoleranzen auszugleichen sind. Aus diesem Grunde wird der türseitige Rastbolzen im allgemeinen nicht starr, sondern mittels eines Justiermechanismus an der Gerätetür befestigt, der eine Positionsänderung des Rastbolzens 5 an der Gerätetür ermöglicht.

Bei der Montage wird zunächst die Gerätetür montiert, so daß sie flächig am Gerät anliegt. In einem zweiten Schritt wird mit Hilfe des Justiermechanismus die Abstandsposition des Rastbolzens 5 gegenüber der Gerätetür so eingestellt, daß die durch den Schaltweg des Schaltschiebers 1 vorgegebene Eindringtiefe des Rastbolzens 5 im Türschloßgehäuse 2 gewährleistet ist und nicht überschritten wird. Die richtige Eindringtiefe ist dann erreicht, wenn die Rastwalzen 116 in die Rastrillen 115 des Rastbolzens 5 einrasten. Dieses Einrasten erfolgt in einem scharf begrenzten Bewegungsbereich des türseitigen Rastelements. Es kann vom Monteur über seinen Tast- oder auch über seinen Gehörsinn wahrgenommen werden. Im Gegensatz zur Justier-Rastvorrichtung erfolgt nämlich das Festlegen des türseitigen Rastbolzens 5 durch die Klinkenhebel 6 im Inneren des Isoliergehäuses 2 nicht abrupt, sondern auf Grund der zusammenwirkenden Keilflächen innerhalb eines relativ großen Bewegungsbereiches des türseitigen Rastbolzens 5 und ist deswegen von Hause aus schwer wahrnehmbar.

### Bezugszeichenliste

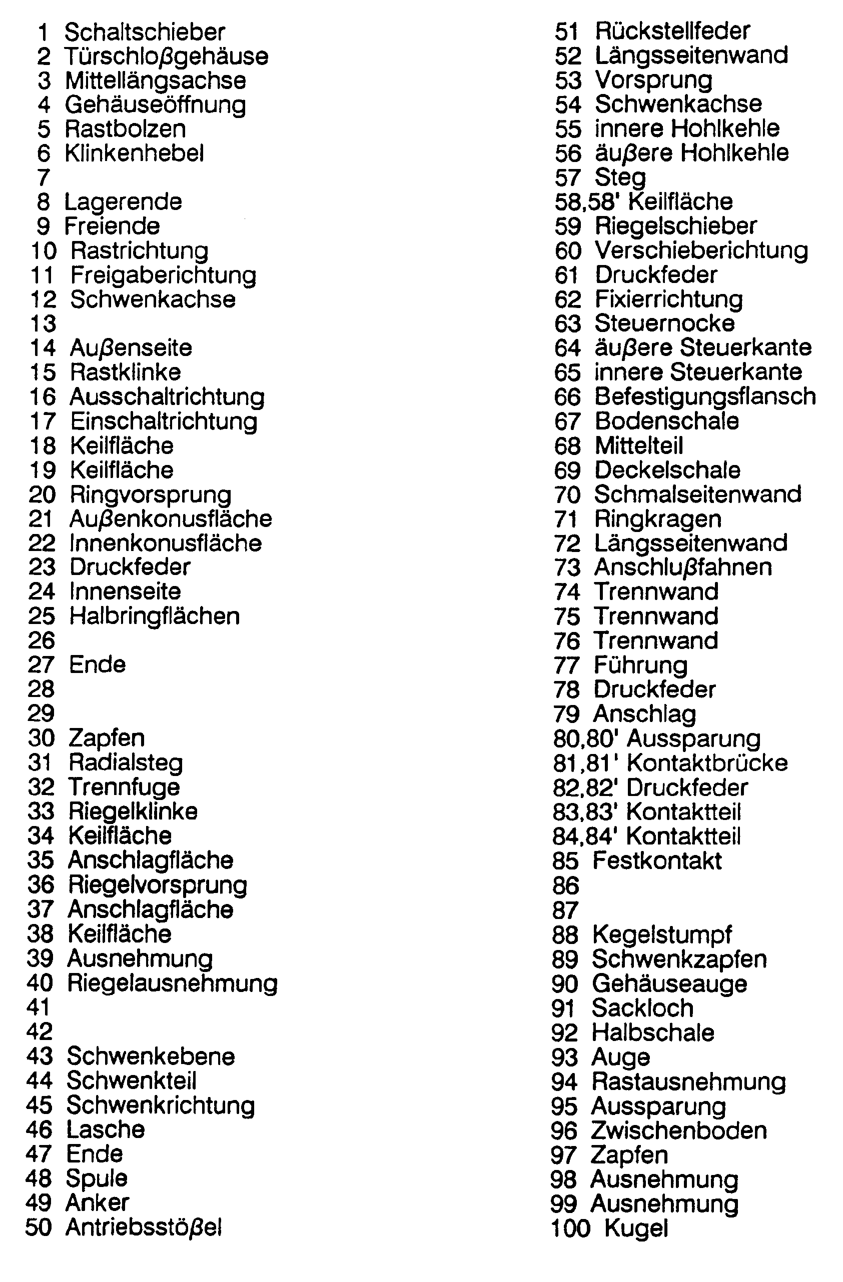

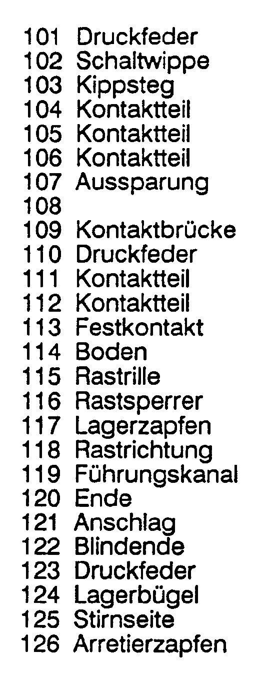

## Patentansprüche

1. Sicherheits-Türschloß für Türen von Elektrogeräten, insbesondere von Elektroherden
- mit einem Rastbolzen (5), der
-- an der Gerätetür durch deren Betätigung längsverschiebbar gelagert ist und
-- zur Türverriegelung in eine Gehäuseöffnung (4) des Türschloßgehäuses (2) einschiebbar ist, und
- mit einem im Türschloßgehäuse (2) längsverschiebbar gelagerten Schaltschieber (1),
-- der gegen den Rückstelldruck einer ihn in seine Ausschaltstellung (Fig. 2) beaufschlagenden Druckfeder (78) durch die Verriegelungsverschiebung des Rastbolzens (5) in eine Einschaltstellung (Fig.6) überführbar ist, in der die elektrischen Gerätefunktionen freigegeben werden, und
- mit einer Rastvorrichtung
-- zur Verrastung des Rastbolzens (5) in Türverriegelungsstellung (Fig.6) und
-- zum Verriegeln des Schaltschiebers (1) in dessen Ausschaltstellung (Fig.2) bei entrastetem Rastbolzen (5),
dadurch gekennzeichnet,
a) daß Rastbolzen (5) und Schaltschieber (1) auf im wesentlichen einer in Ein- und Ausschaltrichtung (17,16) verlaufenden Mittellängsachse (3) derart liegen,
- daß der Rastbolzen (5) bei seiner Überführung in die Türverriegelungsstellung den Schaltschieber (1) in seine Einschaltstellung (Fig.6) schiebt,
b) daß die Rastvorrichtung aus mindestens zwei in Einschaltstellung (Fig.6) die im wesentlichen aneinanderliegenden Enden von Rastbolzen (5) und Schaltschieber (1) nach Art etwa der Spannbacken eines Spannfutters
- an unterschiedlichen Seiten flankierenden und
- im Türschloßgehäuse (2) im wesentlichen radial zur Mittellängsachse (3) beweglich gelagerten
Klinkenträgern besteht,
c) daß die Klinkenträger durch Federdruck (Druckfeder 23) in radialer Verriegelungsrichtung zur Mittellängsachse (3) hin beaufschlagt sind,
d) daß Klinken (15,33) an den Klinkenträgern derart angeordnet sind, daß unter dem Federdruck
- in Einschaltstellung (Fig.6) eine der Gehäuseöffnung (4) zugewandte Rastklinke (15) nach Art des Rastsperrers eines Federrastgesperres in eine Rastausnehmung (94) am Rastbolzen (5) und
- in Ausschaltstellung (Fig.2) eine der Gehäuseöffnung (4) abgewandte Riegelklinke (33) in eine Riegelausnehmung (40) am Schaltschieber (1) dessen Längsverschiebbarkeit sperrend
einfallen und
e) daß der Rastbolzen (5) bei einer Längsverschiebung in seine oder aus seiner Verriegelungsstellung die Klinkenträger aus ihrer Verrastungs- oder Verriegelungsposition aushebt.

2. Türschloß nach Anspruch 1,
dadurch gekennzeichnet,
daß die Klinkenträger nach Art von Greifbacken einer Zange an ihren der Gehäuseöffnung (4) abgewandten Enden (8) am Gehäuse (2) schwenkbar gelagerte Klinkenhebel (6) sind.

3. Türschloß nach Anspruch 1 oder 2,
dadurch gekennzeichnet,
daß die gehäuseöffnungsseitige Rastklinke (15) als Rastsperrer und die Rastausnehmung (94) am Rastbolzen (5) mit mindestens ihrer dem Freiende des Rastbolzens (5) benachbarten Flanke als Keilnutflanke nach Art eines Rastgesperres zusammenwirken.

4. Türschloß nach Anspruch 3,
gekennzeichnet durch
ein elektrisch steuerbares, zwischen einer Inaktivstellung und einer Blockierstellung bewegliches und in Blockierstellung die Sperrwirkung des Rastgesperres durch Bewegungsblockierung der Klinkenträger aufrechterhaltendes Blockierglied.

5. Türschloß nach einem oder mehreren der vorhergehenden Ansprüche,
gekennzeichnet durch
zwei Klinkenhebel (6) an diametral gegenüberliegenden Seiten des Schaltschiebers (1) und des Rastbolzens (5).

6. Türschloß nach einem oder mehreren der vorhergehenden Ansprüche,
dadurch gekennzeichnet,
daß die Klinkenhebel (6) parallel zur Mittellängsachse (3) verlaufen und an ihrem in Einschaltrichtung (17) weisenden, gehäuseöffnungsfernen Ende (8) um eine rechtwinklig zur Mittellängsachse (3) verlaufende Schwenkachse (12) schwenkbar sind.

7. Türschloß nach einem oder mehreren der vorhergehenden Ansprüche,
dadurch gekennzeichnet,
daß die Klinkenhebel (6) in Rastrichtung (10) federbeaufschlagt sind.

8. Türschloß nach Anspruch 7,
dadurch gekennzeichnet,
daß die Klinkenhebel (6) im Bereich ihrer Freienden (9) jeweils von einer Druckfeder (23) beaufschlagt sind, die zwischen der dem Schaltschieber (1) abgewandten Außenseite (14) eines Klinkenhebels (6) und dem Gehäuse (2) eingespannt ist.

9. Türschloß nach einem oder mehreren der vorhergehenden Ansprüche,
dadurch gekennzeichnet,
daß die der Gehäuseöffnung (4) zugewandte Flanke der Rastklinke (15) als Keilfläche (18) ausgebildet ist derart, daß der Rastbolzen (5) bei seiner Verriegelungsverschiebung in Einschaltrichtung (17) die Klinkenhebel (6) auseinanderspreizt, wodurch deren aus ihrer Verriegelungsstellung ausgehobene Riegelklinken (33) die Schaltschieberbewegung in Einschaltrichtung (17) freigeben.

10. Türschloß nach Anspruch 9,
dadurch gekennzeichnet,
daß die Rastklinken (15) im Querschnitt keilförmig ausgebildet sind und eine in Ausschaltrichtung (16) weisende Keilfläche (18) und eine in Einschaltrichtung (17) weisende Keilfläche (19) aufweisen.

11. Türschloß nach Anspruch 9 oder 10,
dadurch gekennzeichnet,
daß der Rastbolzen (5) an seinem in die Gehäuseöffnung (4) einführbaren Ende einen mit den Rastklinken (15) der Klinkenhebel (6) zusammenwirkenden Radialvorsprung aufweist.

12. Türschloß nach Anspruch 11,
dadurch gekennzeichnet,
daß der Radialvorsprung als umlaufender Ringvorsprung (20) ausgebildet ist, der eine in Einschaltrichtung (17) weisende Konusfläche (21) aufweist und dessen in Ausschaltrichtung (16) weisende Steuerschräge (22) ebenfalls als Konusfläche ausgebildet ist.

13. Türschloß nach einem oder mehreren der vorhergehenden Ansprüche,
dadurch gekennzeichnet,
daß die radial nach innen weisenden Innenseiten (24) der Klinkenhebel (6) im Bereich ihrer die Klinken (15,33) enthaltenden Freienden (9) rinnenartig mit in Richtung der Mittellängsachse (3) verlaufender Rinnenrichtung ausgemuldet sind und daß die Klinken (15,33) nach Art halbringförmiger Wulste mit etwa der Mittellängsachse (3) als Ringachse über die Innenseiten (24) vorstehen.

14. Türschloß nach einem oder mehreren der vorhergehenden Ansprüche,
dadurch gekennzeichnet,
daß das in Ausschaltrichtung (16) weisende Ende des Schaltschiebers (1) als Zapfen ausgebildet ist, der in Offenstellung und bei damit verbundener Raststellung der Klinkenhebel (6) von den Rastklinken (15) umfaßt ist, und daß aus dem Zapfenmantel zwei diametral gegenüberliegende Radialstege (31) vorstehen, die in Raststellung der Klinkenhebel (6) in die zwischen deren Freienden (9) freibleibende Trennfuge (32) hineinstehen.

15. Türschloß nach einem oder mehreren der vorhergehenden Ansprüche,
dadurch gekennzeichnet,
daß der Rastbolzen (5) an seiner Stirnseite eine sacklochförmige Ausnehmung (39) zur Aufnahme eines Zapfens (30) des Schaltschiebers (1) aufweist.

16. Türschloß nach einem oder mehreren der vorhergehenden Ansprüche,
dadurch gekennzeichnet,
daß die Riegelklinken (33) etwa mittig zwischen den Klinkenhebelenden (8,9) angeordnet sind.

17. Türschloß nach Anspruch 16,
dadurch gekennzeichnet,
daß die Riegelklinke (33) im Querschnitt sägezahnförmig ausgebildet ist, daß ihre gehäuseöffnungsseitige Flanke als im wesentlichen radial ausgerichtete Anschlagfläche (35) und daß ihre in Einschaltrichtung (17) weisende Flanke als Keilfläche (34) ausgebildet ist.

18. Türschloß nach Anspruch 16 oder 17,
dadurch gekennzeichnet,
daß der Schaltschieber (1) einen mit den Riegelklinken (33) der Klinkenhebel (6) zusammenwirkenden, im Querschnitt sägezahnförmig ausgebildeten Riegelvorsprung (36) aufweist, dessen in Einschaltrichtung (17) weisende Flanke als Anschlagfläche (37) etwa parallel zur Anschlagfläche (35) der Schaltschieber-Rastklinken (33) verläuft und dessen in Ausschaltrichtung (16) weisende Flanke eine als Aushebeschräge gegenüber den Riegelklinken (33) wirksame Keilfläche (38) ist.

19. Türschloß nach Anspruch 4,
dadurch gekennzeichnet,
daß das Blockierglied in einer Nebenkammer des Isoliergehäuses (2) im wesentlichen rechtwinklig zur Schwenkebene (43) der Klinkenhebel (6) zwischen einer in die Schwenkebene der Klinkenhebel (6) eingreifenden Aktiv- und einer aus der Schwenkebene der Klinkenhebel (6) herausbewegten Inaktivstellung beweglich gelagert ist.

20. Türschloß nach Anspruch 19,
dadurch gekennzeichnet,
daß das Blockierglied ein Schwenkteil (44) mit an zwei einander abgewandten Seiten angeformten, in Schwenkrichtung (45) des Schwenkteils (44) nach Art von Gabelzinken vorstehenden Laschen (46) ist, wobei die Laschen (46) in Blockierstellung die Klinkenhebel (6) an ihren Außenseiten (14) klammerartig umfassen.

21. Türschloß nach Anspruch 20,
dadurch gekennzeichnet,
daß die Laschen (46) in Blockierstellung nahe den Freienden (9) der Klinkenhebel (6) liegen.

22. Türschloß nach Anspruch 20 oder 21,
dadurch gekennzeichnet,
daß das Schwenkteil (44) an seinem in Ausschaltrichtung (16) weisenden Ende am Gehäuse (2) gelagert ist.

23. Türschloß nach einem oder mehreren der vorhergehenden Ansprüche,
gekennzeichnet durch
eine nach Art eines Schrittschaltwerkes wirksame, elektromagnetische Antriebsvorrichtung zum Schwenkantrieb des Schwenkteils (44) in seine Blockierstellung und in seine Ausschwenkstellung mit einer Spule (48), einem Anker (49), einem parallel zur Mittellängsachse (3) verschiebbar gelagerten Antriebsstößel (50) zum Antrieb des Schwenkteils (44) und mit einer parallel zur Einschaltrichtung (17) wirksamen Rückstellfeder (51) für den Antriebsstößel (50).

24. Türschloß nach einem oder mehreren der vorhergehenden Ansprüche,
dadurch gekennzeichnet,
daß das Schwenkteil (44) beiderseits seiner Schwenkachse (54) liegende Anschlagflächen für eine alternierende Beaufschlagung durch den Antriebsstößel (50) aufweist.

25. Türschloß nach Anspruch 24,
dadurch gekennzeichnet,
daß die Anschlagflächen als Hohlkehlen (55,56) ausgebildet und durch einen keilförmigen Steg (57) voneinander getrennt sind, dessen Keilflächen (58,58′) den als Kippstößel ausgebildeten Antriebsstößel (50) je nach Schwenkstellung des Schwenkteiles (44) in die bestimmungsgemäße Hohlkehle (55,56) leiten.

26. Türschloß nach einem oder mehreren der vorhergehenden Ansprüche,
gekennzeichnet durch
einen unter dem Druck eines sich am Gehäuse (2) abstützenden Federelements (61) parallel zur Ausschaltrichtung (16) längsbeweglich gelagerten, gegen das Schwenkteil (44) anliegenden und dieses dadurch in seinen beiden Funktions-Schwenkstellungen mechanisch fixierenden Riegelschieber (59).

27. Türschloß nach Anspruch 26,
dadurch gekennzeichnet,
daß die Verschieberichtung des Riegelschiebers (59) rechtwinklig zur Schwenkachse (54) des Schwenkteils (44) und parallel zur Schwenkebene (43) der Klinkenhebel (6) verläuft.

28. Türschloß nach einem oder mehreren der vorhergehenden Ansprüche,
dadurch gekennzeichnet,
daß der Riegelschieber (59) unter dem Druck einer Druckfeder (61) an einer Steuernocke (63) des Schwenkteils (44) anliegt.

29. Türschloß nach Anspruch 28,
dadurch gekennzeichnet,
daß die in Fixierrichtung (62) weisende und mit der Steuernocke (63) zusammenwirkende Stirnseite des Riegelschiebers (59) keilförmig vorspringt und eine vorstehende äußere (64) und eine weit zurückgezogene innere Steuerkante (65) bildet, wobei das Schwenkteil (44) über diese Steuerkanten (64,65) durch deren in Verschieberichtung (60) wirksamen Lageversatz
- einerseits die Verschiebebewegung des Riegelschiebers (59) steuert und
- andererseits das Schwenkteil (44) in seinen beiden Schwenkstellungen fixiert, indem die Steuerkanten (64,65) alternierend die Steuernocke (63) an jeweils einer ihrer Seiten mit einer in Richtung der jeweiligen Endlage wirkenden Druckkomponente beaufschlagen.

30. Türschloß nach einem oder mehreren der vorhergehenden Ansprüche,
dadurch gekennzeichnet,
daß der Riegelschieber (59) eine Schaltvorrichtung trägt, die die elektromagnetische Antriebsvorrichtung für den Antriebsstößel (50) ausschaltet, sobald das Schwenkteil (44) seine Blockierschwenkstellung einnimmt.

31. Türschloß nach einem oder mehreren der vorhergehenden Ansprüche,
dadurch gekennzeichnet,
daß der Riegelschieber (59) seinerseits zur Steuerung von wenigstens einem Stromkreis als Schaltschieber ausgebildet ist.

32. Türschloß nach einem oder mehreren der vorhergehenden Ansprüche,
gekennzeichnet durch
einen in der Gehäuseöffnung (4) angeordneten, federbelasteten Rastsperrer und eine damit nach Art eines Rastgesperres zusammenwirkende Rastrille (115) am Rastbolzen (5), wobei die Rastrille (115) so angeordnet ist, daß der Rastsperrer dann in sie einrastet, wenn die maximale Eindringtiefe des Rastbolzens (5) in das Isoliergehäuse (2) dem zur Bewegung des Schaltschiebers (1) in seine Einschaltstellung nötigen Schaltweg entspricht.

33. Türschloß nach Anspruch 32,
dadurch gekennzeichnet,
daß als Rastsperrer zwei Rastwalzen (116) mit stirnseitig angeformten Lagerzapfen (117) kleineren Durchmessers
- an gegenüberliegenden Seiten der Gehäuseöffnung (4) angeordnet sind,
- parallel zueinander und rechtwinklig zur Mittellängsachse des Schaltschiebers (1) verlaufen,
- rechtwinklig zur Mittellängsachse (3) beweglich sind und
- in Rastrichtung (118) federbeaufschlagt sind.

34. Türschloß nach Anspruch 33,
dadurch gekennzeichnet,
daß die Rastwalzen (116) in rechtwinklig zur Mittellängsachse (3) verlaufenden Führungskanälen (119) des Isoliergehäuses (2) geführt sind, an deren Innenwände sie mit ihrem Umfang und den Stirnseiten ihrer Lagerzapfen (117) anliegen, wobei
- das eine Ende (120) der Führungskanäle (119) in die Gehäuseöffnung (4) mündet und einen Anschlag (121) für die Lagerzapfen (117) aufweist und
- das andere Ende ein Blindende (122) ist.

35. Türschloß nach einem der Ansprüche 32 - 34,
gekennzeichnet durch
eine sich am Bindende (122) des Führungskanals (119) abstützende Druckfeder (123) und ein zwischen Druckfeder (123) und Rastwalze (116) angeordnetes Lagerteil für die Rastwalzen (116).

36. Türschloß nach Anspruch 35,
dadurch gekennzeichnet,
daß das Lagerteil ein im wesentlichen U-förmiger, im Führungskanal (119) geführter Lagerbügel (124) ist, der durch die Druckfeder (123) mit Stirnenden (125) seiner Schenkel an den Umfangsflächen der Lagerzapfen (117) anliegt und die Rastwalzen (116) mit ihren Lagerzapfen (117) gegen die Anschläge (121) an dem in die Gehäuseöffnung (4) mündenden Ende (120) der Führungskanäle (119) drückt.

37. Türschloß nach Anspruch 36,
dadurch gekennzeichnet,
daß die Rastrille (115) einen V-förmigen Querschnitt hat und so bemessen ist, daß die Rastwalzen (116) mit etwa ihrer halben Querschnittsfläche darin einrasten.

## Claims

1. A safety door lock for doors of electrical appliances, in particular electric ovens,
- with a detent bolt (5), which
-- is mounted for longitudinal displacement on the appliance door by actuating the latter and
-- is insertable for bolting the door into a casing opening (4) of the door lock casing (2), and
- with a switching slide (1) mounted in the door lock casing (2) for longitudinal displacement,
-- which slide can be transferred against the restoring pressure of a compression spring (78) urging it into its "off" position (Figure 2) into an "on" position (Figure 6) by the bolting displacement of the detent bolt (5), in which position the functions of the electric appliance are released, and
- with a latching means
-- for latching the detent bolt (5) in the bolted position of the door (Figure 6) and
-- for bolting the switching slide (1) in its "off" position (Figure 2) when the detent bolt (5) is unlatched,
characterized in that
a) the detent bolt (5) and the switching slide (1) lie on a median longitudinal axis (3) which extends substantially in the switching-on and switching-off direction (17, 16) in such a way that as the detent bolt (5) is transferred into the door bolting position, it pushes the switching slide (1) into its "on" position (Figure 6),
b) that the latching means consists of at least two latch carriers which in the "on" position (Figure 6) flank the substantially abutting ends of the detent bolt (5) and of the switching slide (1) approximately in the manner of the clamping jaws of a jaw chuck
- on different sides and
- are movably mounted in the door lock casing (2) substantially radially to the median longitudinal axis (3),
c) that the latch carriers are urged by spring pressure (compression spring 23) in the radial bolting direction towards the median longitudinal axis (3),
d) that latches (15, 33) are arranged on the latch carriers in such a way that under the spring pressure there engage with a locking action:
- in the "on" position (Figure 6), a detent latch (15) facing the casing opening (4), in the manner of a locking pawl of a spring ratchet mechanism in an engagement recess (94) on the detent bolt (5) and
- in the "off" position (Figure 2), a bolt latch (33) remote from the casing opening (4) in a bolt recess 40) on the switching slide (1) blocking its scope for longitudinal displacement and
e) that when being longitudinally displaced into, or from its bolted position, the detent bolt (5) lifts the latch carriers out of their engagement or bolted position.

2. A door lock according to claim 1,
characterized in that
the latch carriers are latch levers (6) which are pivotably mounted on the casing (2) at their ends remote from the casing opening (4) in the manner of gripping jaws of pliers.

3. A door lock according to claim 1 or 2,
characterized in that
the detent latch (15), as a locking latch on the side of the casing opening, and the engagement recess (94) as a keyway flank on the detent bolt (5) with at least its flank adjoining the free end of the detent bolt (5), cooperate in the manner of a ratchet mechanism.

4. A door lock according to claim 3,
characterized by
an electrically controllable blocking member which can be moved between an inactive position and a blocking position and which maintains the locking action of the locking latch in the blocking position by blocking the movement of the latch carriers.

5. A door lock according to one or more of the preceding claims,
characterized by
two latch levers (6) on diametrically opposite sides of the switching slide (1) and of the detent bolt (5).

6. A door lock according to one or more of the preceding claims,
characterized in that
the latch levers (6) extend parallel to the median longitudinal axis (3) and are, at their end (8) remote from the casing opening pointing in the switching-on direction (17), pivotable round a pivot axis (12) that extends at right angles to the median longitudinal axis (3).

7. A door lock according to one or more of the preceding claims,
characterized in that
the latch levers (6) are spring-loaded in the engagement direction (10).

8. A door lock according to claim 7,
characterized in that
in the zone of their free ends (9), the latch levers (6) are each loaded by one compression spring (23) that is held between the outer side (14) of one latch lever (6), which is remote from the switching slide (1), and the casing (2).

9. A door lock according to one or more of the preceding claims,
characterized in that
the flank of the detent latch (15) facing the casing opening (4) is formed as a wedge face (18) in such a way that in its bolting movement in the switching-on direction (17), the detent bolt (5) moves the latch levers (6) away from each other, whereby their bolt latches (33) which have been lifted out of their bolting position, release the movement of the switching slide in the switching-on direction (17).

10. A door lock according to claim 9,
characterized in that
the detent latches (15) are wedge-shaped in cross-section and have one wedge face (18) pointing towards the switching-off direction (16) and one wedge face (19) pointing in the switching-on direction (17).

11. A door lock according to claim 9 or 10,
characterized in that
at its end that can be inserted into the casing opening (4), the detent bolt (5) has a radial projection which cooperates with the detent latches (15) of the latch levers (6).

12. A door lock according to claim 11,
characterized in that
the radial projection is formed as a circumferential annular projection (2) which has a conical surface (21) pointing in the switching-on direction (17), and that its guide surface (22) pointing in the switching-off direction (16) is also formed as a conical surface.

13. A door lock according to one or more of the preceding claims,
characterized in that
the radially inward pointing inner sides (24) of the latch levers (6) are hollowed out in the manner of grooves in the zone of their free ends (9) containing the latches (15, 33), with the direction of the groove extending in the direction of the median longitudinal axis (3), and that the latches (15, 33) project in the manner of semicircular beads beyond the inner sides (24), with the median longitudinal axis (3) approximately forming the ring axis.

14. A door lock according to one or more of the preceding claims,
characterized in that
the end of the switching slide (1) pointing in the switching-off direction (16) is formed as a stub which, in the open position and the engaged position of the latch levers (6) is surrounded by the detent latches (15), and that from the outer surface of the stub, there project two diametrically opposite radial flanges (31) which, in the engaged position of the latch levers (6) project into the separating space (32) remaining free between their free ends (9).

15. A door lock according to one or more of the preceding claims,
characterized in that
the detent bolt (5) has on its end face a blind recess (39) for receiving a pin (30) of the switching slide (1).

16. A door lock according to one or more of the preceding claims,
characterized in that
the bolt latches (33) are arranged approximately centrally between the ends (8, 9) of the latch levers.

17. A door lock according to claim 16,
characterized in that
the bolt latch (33) is saw tooth-shaped in cross-section, that its flank on the side of the casing opening is formed as an abutment face (35) which is substantially radially orientated and that its flank pointing in the switching-on direction (17) is formed as a wedge face (34).

18. A door lock according to claim 16 or 17,
characterized in that
the switching slide (1) has a bolt projection (36), which is saw tooth-shaped in cross-section and cooperates with the bolt latches (33) of the latch levers (6), whose flank pointing in the switching-on direction (17) extends as an abutment face (37) approximately parallel to the abutment face (35) of the bolt latches (33) of the switching slide, and whose flank pointing in the switching-off direction (16) is a wedge face (38) acting as a lift-off slope relative to the bolt latches (33).

19. A door lock according to claim 4,
characterized in that
the blocking member is movably mounted in a side chamber of the insulating casing (2) substantially at right angles to the pivoting plane (43) of the latch levers (6) between an active position reaching into the pivoting plane of the latch levers (6) and an inactive position wherein it is moved out of the pivoting plane of the latch levers (6).

20. A door lock according to claim 19,
characterized in that
the blocking member is a pivoting member (44) with two tabs (46) formed on two sides facing away from each other, projecting in the manner of fork tines in the pivoting direction (45) of the pivoting member (44), in which arrangement, the tabs (46) grip in the blocking position round the latch levers (6) at their outer sides (14) in the manner of a clamp.

21. A door lock according to claim 20,
characterized in that
in the blocking position, the tabs (46) lie near the free ends (9) of the latch levers (6).

22. A door lock according to claim 20 or 21,
characterized in that
the pivoting member (44) is mounted on the casing (2) at its end pointing in the switching-off direction (16).

23. A door lock according to one or more of the preceding claims,
characterized by
an electromagnetic drive device operating in the manner of a stepper mechanism for driving the pivoting member (44) in a pivoting mode into its blocking position and into its swung out position, with a coil (48), an armature (49), and a driving tappet (50) mounted for displacement parallel to the median longitudinal axis (3), for driving the pivoting member (44) and with a restoring spring (51) acting parallel to the switching-on direction (17), for the driving tappet (50).

24. A door lock according to one or more of the preceding claims,
characterized in that
the pivoting member (44) has abutment faces on both sides of its pivot axis (54) for being alternately acted on by the driving tappet (50).

25. A door lock according to claim 24,
characterized in that
the abutment faces are formed as fillets (55, 56) and are separated from each other by a wedge-shaped web (57) whose wedge faces (58, 58′) guide the driving tappet (50) designed as a tipping tappet, into the appropriate fillet (55, 56) depending on the pivoted position of the pivoting member (44).

26. A door lock according to one or more of the preceding claims,
characterized by
a bolting slide (59) mounted for longitudinal displacement parallel to the switching-off direction (16) under the pressure of a spring element (62), abutting against the pivoting member (44) and mechanically fixing the latter thereby in its two functional pivoting positions.

27. A door lock according to claim 26,
characterized in that
the displacement direction of the bolting slide (59) extends at right angles to the pivot axis (54) of the pivoting member (44) and parallel to the pivoting plane (43) of the latch levers (6).

28. A door lock according to one or more of the preceding claims,
characterized in that
the bolting slide (59) bears under the pressure of a compression spring (61) on a cam (63) of the pivoting member (44).

29. A door lock according to claim 28,
characterized in that
the end face of the bolting slide (59) pointing in the fixing direction (62) and cooperating with the cam (63) projects in a wedge shape and forms an outer projecting steering edge (64) and a far retracted inner steering edge (65), in which arrangement, the pivoting member (44)
- controls on the one hand the displacement of the bolting slide (59) by means of these steering edges (64, 65) because of their positional offset that is effective in the displacement direction (60) and
- on the other hand, the pivoting member (44) is fixed in its two pivoting positions, in that the steering edges (64, 65) alternately act on the cam (63) respectively on one of its sides with a pressure component acting in the direction of the respective end position.

30. A door lock according to one or more of the preceding claims,
characterized in that
the bolting slide (59) carries a switching device which switches off the electromagnetic drive device for the driving tappet (50) as soon as the pivoting member (44) assumes its pivoting blocking position.

31. A door lock according to one or more of the preceding claims,
characterized in that
the bolting slide (59) is, for its part, designed as a switching slide for controlling at least one circuit.

32. A door lock according to one or more of the preceding claims,
characterized by
a spring-loaded catch arranged in the casing opening (4) and a detent groove (115) on the detent bolt (5) cooperating with the catch in the manner of a ratchet mechanism, the detent groove (115) being arranged in such a way that the catch engages therein if the maximum penetration depth of the detent bolt (5) into the insulated casing (2) corresponds to the switching path required for moving the switching slide (1) into its "on" position.

33. A door lock according to claim 32,
characterized in that
as catches, two detent rollers (116) with journals (117) with a smaller diameter and formed at their end faces
- are arranged at opposite sides of the casing opening (4),
- extend parallel to each other and at right angles to the median longitudinal axis of the switching slide (1),
- are movable with respect to the median longitudinal axis (3) and
- are spring-loaded in the engagement direction (118).

34. A door lock according to claim 33,
characterized in that
the detent rollers (116) are guided in guide channels (119) of the insulated casing (2) extending at right angles to the median longitudinal axis (3), on the side walls of which channels they bear with their circumference and the end faces of their journals (117), in which arrangement,
- one end (120) of the guide channels (119) leads into the casing opening (4) and has a stop (121) for the journals (117) and
- the other end is a blind end (122).

35. A door lock according to one of claims 32 to 34,
characterized by
a compression spring (123) bearing on the blind end (122) of the guide channel (119) and a supporting component for the detent rollers (116), which is arranged between the compression spring (123) and the detent roller (116).

36. A door lock according to claim 35,
characterized in that
the supporting component is a substantially U-shaped bearing shackle (124) carried in the guide channel (119), which shackle, because of the compression spring (123), bears with the end faces (125) of its arms on the circumferential faces of the journals (117), and which presses the detent rollers (116) with their journals (117) against the stops (121) at the end (120) of the guide channels (119) which leads into the casing opening (4).

37. A door lock according to claim 36,
characterized in that
the detent groove (115) has a V-shaped cross-section and is dimensioned in such a way that the detent rollers engage therein with approximately half of their cross-sectional area.

## Revendications

1. Serrure de sûreté pour portes d'appareils électriques, en particulier de cuisinières électriques
- comprenant un pêne (5) qui
-- est supporté déplaçable longitudinalement en translation sur la porte de l'appareil par la manoeuvre de celle-ci et
-- peut être engagé dans une ouverture ou gâche (4) du palâtre (2) de la serrure en vue du verrouillage de la porte, et
- comprenant un coulisseau commutateur (1) supporté déplaçable longitudinalement en translation dans le palâtre (2) de la serrure,
-- qui peut être amené, contre la pression de rappel d'un ressort de compression (78) chargeant ce coulisseau vers sa position de coupure (figure 2), par le déplacement de verrouillage du pêne (5), à une position d'enclenchement (figure 6) dans laquelle les fonctions électriques de l'appareil sont autorisées et
- comprenant un dispositif d'arrêt
-- pour le maintien par encliquetage du pêne (5) à la position de verrouillage de la porte (figure 6) et
-- pour le verrouillage du coulisseau commutateur (1) à sa position de coupure (figure 2) alors que le pêne (5) est décliqueté,
caractérisée en ce
a) que le pêne (5) et le coulisseau commutateur (1) sont disposés sur un axe longitudinal médian (3) s'étendant pour l'essentiel suivant une direction d'enclenchement et une direction de coupure (17, 16), de manière
que le pêne (5), lorsqu'il est amené à la position de verrouillage de la porte, pousse le coulisseau commutateur (1) à sa position d'enclenchement (figure 6),
b) que le dispositif d'arrêt est constitué d'au moins deux supports de dents qui, à la position d'enclenchement (figure 6),
- sont situés sur différents côtés de part et d'autre des extrémités, appliquées essentiellement l'une contre l'autre, du pêne (5) et du coulisseau commutateur (1), à peu près à la façon des mors d'un mandrin de serrage, et
- sont montés mobiles dans le palâtre (2) de la serrure de porte, pour l'essentiel radialement par rapport à l'axe longitudinal médian (3),
c) que les supports de dents sont chargés par une pression de ressort (ressort de compression 23) dans la direction radiale de verrouillage vers l'axe longitudinal médian (3),
d) que des dents (15, 33) sont disposées sur les supports de dents de manière que sous la pression de ressort
- à la position d'enclenchement (figure 6), une dent d'arrêt (15), dirigée vers la gâche (4), s'engage, à la façon de l'élément d'arrêt d'un mécanisme d'encliquetage à ressort, dans un évidement d'arrêt (94) sur le pêne (5), en bloquant sa mobilité longitudinale, et
- à la position de coupure (figure 2), une dent de verrouillage (33), éloignée de la gâche (4), s'engage dans un évidement d'arrêt (40) sur le coulisseau commutateur (1), en bloquant sa mobilité longitudinale, et
e) que le pêne (5), lors d'une translation longitudinale à ou depuis sa position de verrouillage, dégage les supports de dents de leur position d'encliquetage ou de leur position de verrouillage.

2. Serrure de porte selon la revendication 1, caractérisée en ce que les supports de dents sont des cliquets (6) montés pivotants sur le palâtre (2), à la façon des mors d'une pince, par leurs extrémités (8) éloignées de la gâche.

3. Serrure de porte selon la revendication 1 ou 2, caractérisée en ce que la dent d'arrêt (15), située du côté de la gâche, en tant qu'élément d'arrêt, et l'évidement d'arrêt (94) sur le pêne (5), coopèrent à la façon d'un mécanisme d'encliquetage par au moins leur flanc voisin de l'extrémité libre du pêne (5) en tant que flanc de rainure en coin.

4. Serrure de porte selon la revendication 3, caractérisée par un organe de blocage pouvant être commandé électriquement, mobile entre une position inactive et une position de blocage et préservant, à la position de blocage, l'action d'arrêt du mécanisme d'encliquetage par le blocage du mouvement des supports de dents.

5. Serrure de porte selon une ou plusieurs des revendications précédentes, caractérisée par deux cliquets (6) prévus sur des côtés diamétralement opposés du coulisseau commutateur (1) et du pêne (5).

6. Serrure de porte selon une ou plusieurs des revendications précédentes, caractérisée en ce que les cliquets (6) s'étendent parallèlement à l'axe longitudinal médian (3) et peuvent pivoter, à leur extrémité (8) éloignée de la gâche et tournée dans la direction d'enclenchement (17), autour d'un axe de pivotement (12) perpendiculaire à l'axe longitudinal médian (3).

7. Serrure de porte selon une ou plusieurs des revendications précédentes, caractérisée en ce que les cliquets (6) sont chargés par ressort dans la direction d'arrêt (10).

8. Serrure de porte selon la revendication 7, caractérisée en ce que les cliquets (6) sont chargés chacun, dans la région de leur extrémité libre (9), par un ressort de compression (23) qui est maintenu à l'état précontraint entre le côté extérieur (14) éloigné du coulisseau commutateur (1) d'un cliquet (6) et le palâtre (2).

9. Serrure de porte selon une ou plusieurs des revendications précédentes, caractérisée en ce que le flanc dirigé vers la gâche (4) de la dent d'arrêt (15) est réalisé comme une face de coin (18), l'agencement étant tel que le pêne (5), lors de son déplacement de verrouillage dans la direction d'enclenchement (17), écarte les cliquets (6) l'un de l'autre, de sorte que leurs dents de verrouillage (33), dégagées de leur position de verrouillage, libèrent ou autorisent le mouvement du coulisseau commutateur dans la direction d'enclenchement (17).

10. Serrure de porte selon la revendication 9, caractérisée en ce que les dents d'arrêt (15) ont une forme en coin en section droite et présentent une face de coin (18) tournée dans la direction de coupure (16) et une face de coin (19) tournée dans la direction d'enclenchement (17).

11. Serrure de porte selon la revendication 9 ou 10, caractérisée en ce que le pêne présente, à son extrémité pouvant être introduite dans la gâche (4), une saillie radiale coopérant avec les dents d'arrêt (15) des cliquets (6).

12. Serrure de porte selon la revendication 11, caractérisée en ce que la saillie radiale est réalisée comme une saillie annulaire (20) faisant tout le tour, qui présente une face conique (21) tournée dans la direction d'enclenchement (17) et dont un biseau de commande (22), tourné dans la direction de coupure (16), est réalisé également sous la forme d'une face conique.

13. Serrure de porte selon une ou plusieurs des revendications précédentes, caractérisée en ce que les côtés intérieurs (24) des cliquets (6), côtés qui sont dirigés radialement vers l'intérieur, sont creusés à la façon d'une gouttière dans la région de leurs extrémités libres (9) portant les dents (15, 33), l'orientation des gouttières correspondant à la direction de l'axe longitudinal médian (3), et que les dents (15, 33) font saillie des côtés intérieurs (24) à la façon de bourrelets en forme de demi-anneau, l'axe longitudinal médian (3) correspondant à peu près à l'axe des anneaux.

14. Serrure de porte selon une ou plusieurs des revendications précédentes, caractérisée en ce que l'extrémité tournée dans la direction de coupure (16) du coulisseau commutateur (1) est réalisée sous la forme d'un téton qui, à la position ouverte et à la position d'arrêt qui y est liée des cliquets (6), est entouré des dents d'arrêt (15), et que deux nervures radiales (31) diamétralement opposées font saillie de la surface latérale du téton et pénètrent, à la position d'arrêt des cliquets (6), dans le joint (32) qui subsiste entre leurs extrémités libres (9).

15. Serrure de porte selon une ou plusieurs des revendications précédentes, caractérisée en ce que le pêne (5) présente dans son extrémité frontale un évidement (39) en forme de trou borgne pour la réception d'un téton (30) du coulisseau commutateur (1).

16. Serrure de porte selon une ou plusieurs des revendications précédentes, caractérisée en ce que les dents de verrouillage (33) sont situées à peu près au milieu entre les extrémités (8, 9) des cliquets.

17. Serrure de porte selon la revendication 16, caractérisée en ce que la dent de verrouillage (33) est réalisée en forme de dent de scie en section droite, que son flanc côté gâche est réalisé comme une face de butée (35) orientée pour l'essentiel radialement et que son flanc tourné dans la direction d'enclenchement (17) est réalisé comme une face de coin (34).

18. Serrure de porte selon la revendication 16 ou 17, caractérisée en ce que le coulisseau commutateur (1) comporte une saillie de verrouillage (36), en forme de dent de scie en section droite, qui coopère avec les dents de verrouillage (33) des cliquets (6), dont le flanc tourné dans la direction d'enclenchement (37) s'étend, en tant que face de butée (37), à peu près parallèlement à la face de butée (35) des dents de verrouillage (33) du coulisseau commutateur et dont le flanc tourné dans la direction de coupure (16), est une face de coin (38) agissant comme un biseau de dégagement à l'égard des dents de verrouillage (33).

19. Serrure de porte selon la revendication 4, caractérisée en ce que l'organe de blocage est monté mobile, dans une chambre annexe du palâtre (2) en matériau isolant, pour l'essentiel perpendiculairement au plan de pivotement (43) des cliquets (6), entre une position active dans laquelle cet organe pénètre dans le plan de pivotement des cliquets (6) et une position inactive dans laquelle il est déplacé hors de ce plan de pivotement.

20. Serrure de porte selon la revendication 19, caractérisée en ce que l'organe de blocage est une pièce basculante (44) pourvue de pattes formées sur deux côtés mutuellement éloignés l'un de l'autre, qui font saillie à la façon des dents d'une fourche dans la direction de basculement (45) de la pièce basculante (44) et qui entourent, à la position de blocage, les cliquets (6) à la façon d'une agrafe sur leurs côtés extérieurs (14).

21. Serrure de porte selon la revendication 20, caractérisée en ce que les pattes (46) sont situées près des extrémités libres (9) des cliquets (6) à la position de blocage.

22. Serrure de porte selon la revendication 20 ou 21, caractérisée en ce que la pièce basculante (44) est montée sur le palâtre (2) à son extrémité tournée dans la direction de coupure (16).

23. Serrure de porte selon une ou plusieurs des revendications précédentes, caractérisée par une commande électromagnétique, agissant à la façon d'un mécanisme pas-à-pas, pour basculer la pièce basculante (44) à sa position de blocage et à sa position de basculement vers l'extérieur, commande qui comprend une bobine (48), une armature (49), un poussoir de commande (50) monté mobile en translation parallèlement à l'axe longitudinal médian (3) et servant à commander la pièce basculante (44), ainsi qu'un ressort de rappel (51) agissant parallèlement à la direction d'enclenchement (17) pour le poussoir de commande (50).

24. Serrure de porte selon une ou plusieurs des revendications précédentes, caractérisée en ce que la pièce basculante (44) présente des faces de butée, situées des deux côtés de son axe de basculement (54), en vue d'un actionnement alternatif par le poussoir de commande (50).

25. Serrure de porte selon la revendication 24, caractérisée en ce que les faces de butée sont réalisées comme des gorges (55, 56) et sont séparées l'une de l'autre par une nervure (57) en forme de coin, dont les faces de coin (58, 58′) dirigent le poussoir de commande (50), réalisé comme un poussoir de basculement, dans la gorge (55, 56) voulue suivant la position en basculement de la pièce basculante (44).

26. Serrure de porte selon une ou plusieurs des revendications précédentes, caractérisée par un coulisseau de verrouillage (59) monté longitudinalement déplaçable, parallèlement à la direction de coupure (16), sous la pression d'un élément élastique (61) s'appuyant sur le palâtre (2), coulisseau de verrouillage qui est appliqué contre la pièce basculante (44) et fixe ainsi cette pièce, mécaniquement, dans ses deux positions fonctionnelles de basculement.

27. Serrure de porte selon la revendication 26, caractérisée en ce que la direction de translation du coulisseau de verrouillage (59) est perpendiculaire à l'axe de basculement (54) de la pièce basculante (44) et parallèle au plan de pivotement (43) des cliquets (6).

28. Serrure de porte selon une ou plusieurs des revendications précédentes, caractérisée en ce que le coulisseau de verrouillage (59) s'applique sous la pression d'un ressort de compression (61) contre un taquet de commande (63) de la pièce basculante (44).

29. Serrure de porte selon la revendication 28, caractérisée en ce que le côté d'extrémité du coulisseau de verrouillage (59) tourné dans la direction de fixation (62) et coopérant avec le taquet de commande (63), fait saillie en forme de coin et constitue une arête de commande extérieure (64) saillante et une arête de commande intérieure (65) disposée loin en retrait, ces arêtes de commande (64, 65), par suite de leur décalage de position agissant dans la direction de translation (60), ayant pour effet
- d'une part, que la pièce basculante (44) commande le mouvement de translation du coulisseau de verrouillage (59) et
- d'autre part, que le coulisseau de verrouillage (59) fixe la pièce basculante (44) à ses deux positions en basculement, du fait que les arêtes de commande (64, 65) agissent alternativement sur l'un ou l'autre côté du taquet de commande (63) par une composante de pression agissant en direction de la position de fin de course concernée.

30. Serrure de porte selon une ou plusieurs des revendications précédentes, caractérisée en ce que le coulisseau de verrouillage (59) porte un dispositif de commutation qui arrête la commande électromagnétique pour le poussoir de commande (50) dès que la pièce basculante (44) prend sa position en basculement correspondant à la position de blocage.

31. Serrure de porte selon une ou plusieurs des revendications précédentes, caractérisée en ce que le coulisseau de verrouillage (59) est réalisé lui-même comme un coulisseau commutateur pour commander au moins un circuit électrique.

32. Serrure de porte selon une ou plusieurs des revendications précédentes, caractérisée par un élément d'arrêt chargé par ressort, disposé dans la gâche (4), et une gorge d'arrêt (115) prévue sur le pêne (5) et coopérant avec cet élément à la façon d'un mécanisme d'encliquetage, la gorge (115) étant agencée de manière que l'élément d'arrêt s'encliquette en elle lorsque la profondeur de pénétration maximale du pêne (5) dans le palâtre (2) en matériau isolant correspond à la course de commutation nécessaire au mouvement du coulisseau commutateur (1) à sa position d'enclenchement.

33. Serrure de porte selon la revendication 32, caractérisée en ce que, comme éléments d'arrêt, deux rouleaux d'arrêt (116), possédant des tourillons (117) de plus petit diamètre formés sur leurs extrémités,
- sont disposés sur des côtés mutuellement opposés de la gâche (4),
- s'étendent parallèlement entre eux et perpendiculairement à l'axe longitudinal médian du coulisseau commutateur (1),
- sont mobiles à angle droit par rapport à l'axe longitudinal médian (3) et
- sont chargés par ressort dans la direction d'arrêt (118).

34. Serrure de porte selon la revendication 33, caractérisée en ce que les rouleaux d'arrêt (116) sont guidés dans des cavités de guidage (119) orientées à angle droit par rapport à l'axe longitudinal médian (3) du palâtre (2) en matériau isolant, cavités contre les parois intérieures desquelles les rouleaux sont appliqués par leur pourtour et par les extrémités de leurs tourillons (117), l'agencement étant tel que
- une extrémité (120) des cavités de guidage (119) débouche dans la gâche (4) et présente une butée (121) pour les tourillons (117) et
- l'autre extrémité est une extrémité aveugle (122).

35. Serrure de porte selon une des revendications 32 - 34, caractérisée par un ressort de compression (123) appuyé sur l'extrémité aveugle (122) de la cavité de guidage (119), ainsi que par une pièce de montage pour le rouleau d'arrêt (116), pièce qui est disposée entre le ressort de compression (123) et le rouleau d'arrêt (116).

36. Serrure de porte selon la revendication 35, caractérisée en ce que la pièce de montage est un étrier de montage (124) de forme essentiellement en U et guidé dans la cavité de guidage (119), qui est appliqué sous l'effet du ressort de compression (123) contre les surfaces périphériques des tourillons (117) par les extrémités (125) de ses branches et qui presse le rouleau d'arrêt (116) par ses tourillons (117) contre les butées (121) à l'extrémité (120) de la cavité de guidage (119) débouchant dans la gâche (4).

37. Serrure de porte selon la revendication 36, caractérisée en ce que la gorge d'arrêt (115) possède une section droite en forme de V et est dimensionnée de manière que les rouleaux d'arrêt (116) viennent s'y encliqueter par la moitié environ de leur aire de section droite.
